# EUROPEAN PATENT APPLICATION

(11) **EP 4 726 545 A1**
(43) Date of publication of application: **15.04.2026**
(21) Application number: 24853456.2
(22) Date of filing: 12.07.2024
(51) Int. Cl.: G06F 9/48

(54) **RESOURCE SCHEDULING METHOD AND APPARATUS, AND ELECTRONIC DEVICE**

(30) Priority: 14.08.2023 CN 202311023357
(71) Applicant: Huawei Technologies Co., Ltd., Shenzhen, Guangdong 518129 (CN)
(72) Inventor: BAO, Yangyang, Shenzhen, Guangdong 518129 (CN); QIU, Ge, Shenzhen, Guangdong 518129 (CN); WANG, Xiayang, Shenzhen, Guangdong 518129 (CN); LI, Zongfeng, Shenzhen, Guangdong 518129 (CN); LIN, Yuheng, Shenzhen, Guangdong 518129 (CN)
(74) Representative: Goddar, Heinz J.
(86) International application number: PCT/CN2024/105080
(87) International publication number: WO 2025/036044

(57) **Abstract**

This application provides a resource scheduling method and apparatus, and an electronic device. The method includes: when a first thread of an application is detected, obtaining, in an i^{th} periodicity of the first thread based on a thread wakeup relationship, a key thread list corresponding to the i^{th} periodicity, where the key thread list includes one or more key threads related to the first thread, i is a natural number, and i=1, 2, 3, 4, ...; and performing resource scheduling based on the key thread list corresponding to the i^{th} periodicity. According to the method, the apparatus, and the electronic device, in a system, a key thread related to a running task is determined, based on a thread wakeup relationship, from threads related to the running task. A process of identifying the key thread does not depend on subjective determining of an application developer, and the key thread related to the running task can be accurately identified, so that resource supply can be preferentially ensured for the determined key thread, to achieve better resource scheduling.

## Description

This application claims priority to Chinese Patent Application No. 202311023357.7, filed with the China National Intellectual Property Administration on August 14, 2023 and entitled "RESOURCE SCHEDULING METHOD AND APPARATUS, AND ELECTRONIC DEVICE", which is incorporated herein by reference in its entirety.

### TECHNICAL FIELD

Embodiments of this application relate to the resource scheduling field, and more specifically, to a resource scheduling method and apparatus, and an electronic device.

### BACKGROUND

In an operating system, running of an application depends on a large quantity of related threads. A frame drawing scenario is used as an example. An execution process of a frame drawing service depends on a plurality of threads related to the frame drawing service. Among these threads, there are some key threads that directly affect execution of the frame drawing service. When resource supply for these key threads is insufficient, service execution is greatly affected (for example, application freezing is caused), thereby affecting user experience.

Because system resources are limited, it is difficult to enable all threads to obtain relatively high supply at the same time. Therefore, how to identify a specific key thread becomes a problem that needs to be urgently resolved currently.

### SUMMARY

This application provides a resource scheduling method and apparatus, and an electronic device. According to the method, the apparatus, or the electronic device, in a system, a key thread related to a running task is determined, based on a thread wakeup relationship, from threads related to the running task. A process of identifying the key thread does not depend on subjective determining of an application developer, and the key thread related to the running task can be accurately identified, so that resource supply can be preferentially ensured for the determined key thread, to achieve better resource scheduling.

According to a first aspect, a resource scheduling method is provided. The method includes: when a first thread of an application is detected, obtaining, in an i^{th} periodicity of the first thread based on a thread wakeup relationship, a key thread list corresponding to the i^{th} periodicity, where the key thread list includes one or more key threads related to the first thread, i is a natural number, and i=1, 2, 3, 4, ...; and performing resource scheduling based on the key thread list corresponding to the i^{th} periodicity.

The key thread related to the first thread may be understood as a thread that has key impact on running of the first thread.

It should be understood that the i^{th} periodicity of the first thread is the i^{th} periodicity of the first thread.

The first thread has a plurality of running periodicities. The i^{th} periodicity of the first thread may indicate an i^{th} running periodicity of the first thread, or may indicate a specific quantity of running periodicities of the first thread (for example, every three running periodicities are one periodicity of the first thread). A time length of the running periodicity may be determined by a system.

A correspondence exists between the thread wakeup relationship and the periodicity of the first thread. The thread wakeup relationship means an association relationship between the first thread and another thread. In the foregoing description, the thread wakeup relationship means a thread wakeup relationship corresponding to the i^{th} periodicity of the first thread.

In this embodiment of this application, in a system, a key thread related to a running task is determined, based on a thread wakeup relationship, from threads related to the running task. A process of identifying the key thread does not depend on subjective determining of an application developer, and the key thread related to the running task can be accurately identified, so that resource supply can be preferentially ensured for the determined key thread, to achieve better resource scheduling.

With reference to the first aspect, in a possible implementation, the method further includes: updating, in an (i+1)^{th} periodicity of the first thread, the key thread list corresponding to the i^{th} periodicity, to obtain a key thread list corresponding to the (i+1)^{th} periodicity; and performing resource scheduling based on the key thread list corresponding to the (i+1)^{th} periodicity.

In this embodiment of this application, the key thread list is updated in each periodicity of the first thread. In this way, the key thread list is updated in time, so that resource scheduling has better real-time performance, thereby further improving smoothness of the system.

With reference to the first aspect, in a possible implementation, updating, in the (i+1)^{th} periodicity of the first thread, the key thread list corresponding to the i^{th} periodicity, to obtain the key thread list corresponding to the (i+1)^{th} periodicity includes: obtaining, in the (i+1)^{th} periodicity of the first thread based on a thread wakeup relationship, one or more second threads corresponding to the (i+1)^{th} periodicity; and updating, based on the one or more second threads corresponding to the (i+1)^{th} periodicity, the key thread list corresponding to the i^{th} periodicity, to obtain the key thread list corresponding to the (i+1)^{th} periodicity.

In the foregoing description, the thread wakeup relationship is a thread wakeup relationship corresponding to the (i+1)^{th} periodicity of the first thread, and thread wakeup relationships corresponding to different periodicities of the first thread may be different or may be the same.

In this embodiment of this application, in each periodicity of the first thread, one or more key threads corresponding to the periodicity are determined based on a thread wakeup relationship corresponding to the periodicity. In this way, the key thread list can be updated in time, so that resource scheduling has better real-time performance, thereby further improving smoothness of the system.

With reference to the first aspect, in a possible implementation, obtaining, in the i^{th} periodicity of the first thread based on the thread wakeup relationship, the key thread list corresponding to the i^{th} periodicity includes: determining, in the i^{th} periodicity of the first thread based on the thread wakeup relationship, one or more second threads corresponding to the i^{th} periodicity, where the second thread is a thread related to the first thread; determining a weight of each of the one or more second threads corresponding to the i^{th} periodicity; and determining, based on the weight of each of the one or more second threads corresponding to the i^{th} periodicity, the key thread list corresponding to the i^{th} periodicity from the one or more second threads corresponding to the i^{th} periodicity.

In this embodiment of this application, the weights are assigned to the one or more threads related to the first thread, and the key thread list is further determined based on values of the weights of these threads. A process of identifying the key thread does not depend on subjective determining of an application developer, and the key thread related to the running task can be accurately identified, so that resource supply can be preferentially ensured for the determined key thread, to achieve better resource scheduling.

With reference to the first aspect, in a possible implementation, before determining the weight of each of the one or more second threads corresponding to the i^{th} periodicity, the method further includes: excluding a first-type thread in the one or more second threads corresponding to the i^{th} periodicity, where the first-type thread includes a high-priority thread and/or a reusable thread.

In this embodiment of this application, before the key thread list is determined, a thread that does not need performance assurance and that is in other threads related to the first thread can be excluded, so that all key threads in the finally obtained key thread list are threads that actually affect running performance of a frame drawing thread and that need performance assurance, thereby avoiding misidentification of the key thread and unnecessary resource supply.

With reference to the first aspect, in a possible implementation, determining the weight of each of the one or more second threads corresponding to the i^{th} periodicity includes: adding, to a candidate thread list, the one or more second threads corresponding to the i^{th} periodicity, to obtain a candidate thread list corresponding to the i^{th} periodicity; adding a first weight to each weight value of the one or more second threads corresponding to the i^{th} periodicity; and subtracting a second weight from each of weight values of all candidate threads in the candidate thread list corresponding to the i^{th} periodicity.

In an implementation, the weight is a weight value; and a is added to each weight value of the one or more second threads corresponding to the i^{th} periodicity, and b is subtracted from each of the weight values of all the candidate threads in the candidate thread list corresponding to the i^{th} periodicity, where a is greater than 0, and b is greater than 0.

In this embodiment of this application, a weight is assigned to a related thread, and the weight of the related thread is adaptively adjusted in running to each frame of the first thread. This provides a basis for subsequently dynamically updating a key thread list based on a change of the weight of the related thread.

With reference to the first aspect, in a possible implementation, determining the key thread list corresponding to the i^{th} periodicity includes: adding, to a key thread list, a candidate thread whose weight is greater than a first weight threshold in the candidate thread list corresponding to the i^{th} periodicity, to determine the key thread list corresponding to the i^{th} periodicity.

In an implementation, a candidate thread whose weight value is greater than c in the candidate thread list corresponding to the i^{th} periodicity is added to the key thread list, to determine the key thread list corresponding to the i^{th} periodicity, where c is greater than 0.

In this embodiment of this application, a weight is assigned to a related thread, and the weight of the related thread is adaptively adjusted in running to each periodicity of the first thread, so that a key thread list is dynamically updated based on a change of the weight of the related thread. Therefore, an identification result of the key thread is adaptive to a change of a running status of the first thread, thereby further improving accuracy of identifying the key thread.

With reference to the first aspect, in a possible implementation, updating, based on the one or more second threads corresponding to the (i+1)^{th} periodicity, the key thread list corresponding to the i^{th} periodicity, to obtain the key thread list corresponding to the (i+1)^{th} periodicity includes: updating, based on the one or more second threads corresponding to the (i+1)^{th} periodicity, a candidate thread list corresponding to the i^{th} periodicity, to obtain a candidate thread list corresponding to the (i+1)^{th} periodicity, where the candidate thread list corresponding to the (i+1)^{th} periodicity includes the one or more second threads corresponding to the (i+1)^{th} periodicity; adding a first weight to each weight of the one or more second threads corresponding to the (i+1)^{th} periodicity; subtracting a second weight from each of weights of all candidate threads in the candidate thread list corresponding to the (i+1)^{th} periodicity; and updating, based on the weight of each candidate thread in the candidate thread list corresponding to the (i+1)^{th} periodicity, the key thread list corresponding to the i^{th} periodicity, to obtain the key thread list corresponding to the (i+1)^{th} periodicity.

In an implementation, a is added to each weight value of the one or more second threads corresponding to the (i+1)^{th} periodicity, and b is subtracted from each of the weight values of all the candidate threads in the candidate thread list corresponding to the (i+1)^{th} periodicity. The key thread list corresponding to the i^{th} periodicity is updated based on the weight value of each candidate thread in the candidate thread list corresponding to the (i+1)^{th} periodicity, to obtain the key thread list corresponding to the (i+1)^{th} periodicity, where a is greater than 0, and b is greater than 0.

In this embodiment of this application, a weight is assigned to a related thread, and the weight of the related thread is adaptively adjusted in running to each periodicity of the first thread. This provides a basis for subsequently dynamically updating a key thread list based on a change of the weight of the related thread. Therefore, an identification result of the key thread is adaptive to a change of a running status of the first thread, thereby further improving accuracy of identifying the key thread.

With reference to the first aspect, in a possible implementation, before updating, based on the one or more second threads corresponding to the (i+1)^{th} periodicity, the candidate thread list corresponding to the i^{th} periodicity, the method further includes: excluding a first-type thread in the one or more second threads corresponding to the (i+1)^{th} periodicity, where the first-type thread includes a high-priority thread and/or a reusable thread.

In this embodiment of this application, in each periodicity of the first thread, before the key thread list is determined, a thread that does not need performance assurance and that is in other threads related to the first thread can be excluded, so that all key threads in the finally obtained key thread list are threads that actually affect running performance of a frame drawing thread and that need performance assurance, thereby avoiding misidentification of the key thread and unnecessary resource supply.

With reference to the first aspect, in a possible implementation, updating, based on the weight of each candidate thread in the candidate thread list corresponding to the (i+1)^{th} periodicity, the key thread list corresponding to the i^{th} periodicity includes: adding, to the key thread list corresponding to the i^{th} periodicity, a thread whose weight is greater than a first weight threshold in the candidate thread list corresponding to the (i+1)^{th} periodicity; and removing, from the key thread list corresponding to the i^{th} periodicity, a thread whose weight is less than a second weight threshold in the candidate thread list corresponding to the (i+1)^{th} periodicity, where the first weight threshold is greater than or equal to the second weight threshold.

In an implementation, a thread whose weight value is greater than c in the candidate thread list corresponding to the (i+1)^{th} periodicity is added to the key thread list corresponding to the i^{th} periodicity; and a thread whose weight value is less than d in the candidate thread list corresponding to the (i+1)^{th} periodicity is removed from the key thread list corresponding to the i^{th} periodicity, where c≥d>0.

In this embodiment of this application, a weight is assigned to a related thread, and the weight of the related thread is adaptively adjusted in running to each periodicity of the first thread, so that a key thread list is dynamically updated based on a change of the weight of the related thread. Therefore, an identification result of the key thread is adaptive to a change of a running status of the first thread, thereby further improving accuracy of identifying the key thread.

With reference to the first aspect, in a possible implementation, performing resource scheduling based on the key thread list corresponding to the i^{th} periodicity includes: increasing resource supply for a thread in the key thread list corresponding to the i^{th} periodicity, and reducing resource supply for a thread outside the key thread list corresponding to the i^{th} periodicity; or performing resource scheduling based on the key thread list corresponding to the (i+1)^{th} periodicity includes: increasing resource supply for a thread in the key thread list corresponding to the (i+1)^{th} periodicity, and reducing resource supply for a thread outside the key thread list corresponding to the (i+1)^{th} periodicity.

In this embodiment of this application, after the key thread list of the first thread is determined, targeted resource supply is provided for the thread in the key thread list, to improve rationality of resource allocation and timeliness and effectiveness of resource supply, thereby ensuring running efficiency of the first thread.

With reference to the first aspect, in a possible implementation, the method further includes: providing resource supply for a thread in the key thread list at levels.

In this embodiment of this application, key threads in a key thread list are divided into levels based on weights of the key threads, and different weight intervals correspond to different resource scheduling levels, to implement hierarchical resource supply management and control for the key threads, so that resource supply can better match an actual requirement of the thread. In this way, resource scheduling is more rational, thereby improving running performance of the first thread and avoiding a waste of system resources to some extent.

With reference to the first aspect, in a possible implementation, the first weight is equal to a₁ when i is less than or equal to a first periodicity threshold, and the first weight is equal to a₂ when i is greater than the first periodicity threshold, where a₁>a₂>0.

In this embodiment of this application, a weight of a candidate thread identified in a current periodicity is increased in several previous periodicities of the first thread, so that these candidate threads can more quickly reach a key thread identification threshold. Therefore, the system can more quickly identify the key thread, thereby improving timeliness of resource scheduling.

With reference to the first aspect, in a possible implementation, the first thread is a frame drawing thread.

In an implementation, a duration of a periodicity of the frame drawing thread may be a duration corresponding to drawing a frame of image by the frame drawing thread.

Optionally, the first thread is a frame drawing thread of a third-party application.

In this embodiment of this application, the solutions of this application are applied to a frame drawing scenario (for example, a frame drawing scenario of the third-party application), to improve running performance of the frame drawing thread, thereby improving smoothness of a drawing process of the system.

According to a second aspect, a resource scheduling apparatus is provided. The apparatus includes: an obtaining module, configured to: when a first thread of an application is detected, obtain, in an i^{th} periodicity of the first thread based on a thread wakeup relationship, a key thread list corresponding to the i^{th} periodicity, where the key thread list includes one or more key threads related to the first thread, i is a natural number, and i=1, 2, 3, 4, ...; and a resource scheduling module, configured to perform resource scheduling based on the key thread list corresponding to the i^{th} periodicity.

The key thread related to the first thread may be understood as a thread that has key impact on running of the first thread.

The first thread has a plurality of running periodicities. The i^{th} periodicity of the first thread may indicate an i^{th} running periodicity of the first thread, or may indicate a specific quantity of running periodicities of the first thread (for example, every three running periodicities are one periodicity of the first thread). A time length of the running periodicity may be determined by a system.

A correspondence exists between the thread wakeup relationship and the periodicity of the first thread. The thread wakeup relationship means an association relationship between the first thread and another thread. In the foregoing description, the thread wakeup relationship means a thread wakeup relationship corresponding to the i^{th} periodicity of the first thread.

In this embodiment of this application, in a system, a key thread related to a running task is determined, based on a thread wakeup relationship, from threads related to the running task. A process of identifying the key thread does not depend on subjective determining of an application developer, and the key thread related to the running task can be accurately identified, so that resource supply can be preferentially ensured for the determined key thread, to achieve better resource scheduling.

With reference to the second aspect, in a possible implementation, the apparatus further includes: an update module, configured to: update, in an (i+1)^{th} periodicity of the first thread, the key thread list corresponding to the i^{th} periodicity, to obtain a key thread list corresponding to the (i+1)^{th} periodicity; and the resource scheduling module is further configured to perform resource scheduling based on the key thread list corresponding to the (i+1)^{th} periodicity.

In this embodiment of this application, the key thread list is updated in each periodicity of the first thread. In this way, the key thread list is updated in time, so that resource scheduling has better real-time performance, thereby further improving smoothness of the system.

With reference to the second aspect, in a possible implementation, the update module is specifically configured to: obtain, in the (i+1)^{th} periodicity of the first thread based on a thread wakeup relationship, one or more second threads corresponding to the (i+1)^{th} periodicity; and update, based on the one or more second threads corresponding to the (i+1)^{th} periodicity, the key thread list corresponding to the i^{th} periodicity, to obtain the key thread list corresponding to the (i+1)^{th} periodicity.

In the foregoing description, the thread wakeup relationship is a thread wakeup relationship corresponding to the (i+1)^{th} periodicity of the first thread, and thread wakeup relationships corresponding to different periodicities of the first thread may be different or may be the same.

In this embodiment of this application, in each periodicity of the first thread, one or more key threads corresponding to the periodicity are determined based on a thread wakeup relationship corresponding to the periodicity. In this way, the key thread list can be updated in time, so that resource scheduling has better real-time performance, thereby further improving smoothness of the system.

With reference to the second aspect, in a possible implementation, the obtaining module is specifically configured to: determine, in the i^{th} periodicity of the first thread based on the thread wakeup relationship, one or more second threads corresponding to the i^{th} periodicity, where the second thread is a thread related to the first thread; determine a weight of each of the one or more second threads corresponding to the i^{th} periodicity; and determine, based on the weight of each of the one or more second threads corresponding to the i^{th} periodicity, the key thread list corresponding to the i^{th} periodicity from the one or more second threads corresponding to the i^{th} periodicity.

In this embodiment of this application, the weights are assigned to the one or more threads related to the first thread, and the key thread list is further determined based on values of the weights of these threads. A process of identifying the key thread does not depend on subjective determining of an application developer, and the key thread related to the running task can be accurately identified, so that resource supply can be preferentially ensured for the determined key thread, to achieve better resource scheduling.

With reference to the second aspect, in a possible implementation, the apparatus further includes: a preprocessing module, configured to exclude a first-type thread in the one or more second threads corresponding to the i^{th} periodicity, where the first-type thread includes a high-priority thread and/or a reusable thread.

In this embodiment of this application, before the key thread list is determined, a thread that does not need performance assurance and that is in other threads related to the first thread can be excluded, so that all key threads in the finally obtained key thread list are threads that actually affect running performance of a frame drawing thread and that need performance assurance, thereby avoiding misidentification of the key thread and unnecessary resource supply.

With reference to the second aspect, in a possible implementation, the obtaining module is further specifically configured to: add, to a candidate thread list, the one or more second threads corresponding to the i^{th} periodicity, to obtain a candidate thread list corresponding to the i^{th} periodicity; add a first weight to each weight value of the one or more second threads corresponding to the i^{th} periodicity; and subtract a second weight from each of weight values of all candidate threads in the candidate thread list corresponding to the i^{th} periodicity.

In an implementation, the weight is a weight value; and a is added to each weight value of the one or more second threads corresponding to the i^{th} periodicity, and b is subtracted from each of the weight values of all the candidate threads in the candidate thread list corresponding to the i^{th} periodicity, where a is greater than 0, and b is greater than 0.

In this embodiment of this application, a weight is assigned to a related thread, and the weight of the related thread is adaptively adjusted in running to each frame of the first thread. This provides a basis for subsequently dynamically updating a key thread list based on a change of the weight of the related thread.

With reference to the second aspect, in a possible implementation, the obtaining module is further specifically configured to: add, to a key thread list, a candidate thread whose weight is greater than a first weight threshold in the candidate thread list corresponding to the i^{th} periodicity, to determine the key thread list corresponding to the i^{th} periodicity.

In an implementation, a candidate thread whose weight value is greater than c in the candidate thread list corresponding to the i^{th} periodicity is added to the key thread list, to determine the key thread list corresponding to the i^{th} periodicity, where c is greater than 0.

In this embodiment of this application, a weight is assigned to a related thread, and the weight of the related thread is adaptively adjusted in running to each periodicity of the first thread, so that a key thread list is dynamically updated based on a change of the weight of the related thread. Therefore, an identification result of the key thread is adaptive to a change of a running status of the first thread, thereby further improving accuracy of identifying the key thread.

With reference to the second aspect, in a possible implementation, the update module is further specifically configured to: update, based on the one or more second threads corresponding to the (i+1)^{th} periodicity, a candidate thread list corresponding to the i^{th} periodicity, to obtain a candidate thread list corresponding to the (i+1)^{th} periodicity, where the candidate thread list corresponding to the (i+1)^{th} periodicity includes the one or more second threads corresponding to the (i+1)^{th} periodicity; add a first weight to each weight value of the one or more second threads corresponding to the (i+1)^{th} periodicity; subtract a second weight from each of weight values of all candidate threads in the candidate thread list corresponding to the (i+1)^{th} periodicity; and update, based on the weight of each candidate thread in the candidate thread list corresponding to the (i+1)^{th} periodicity, the key thread list corresponding to the i^{th} periodicity, to obtain the key thread list corresponding to the (i+1)^{th} periodicity.

In an implementation, a is added to each weight value of the one or more second threads corresponding to the (i+1)^{th} periodicity, and b is subtracted from each of the weight values of all the candidate threads in the candidate thread list corresponding to the (i+1)^{th} periodicity. The key thread list corresponding to the i^{th} periodicity is updated based on the weight value of each candidate thread in the candidate thread list corresponding to the (i+1)^{th} periodicity, to obtain the key thread list corresponding to the (i+1)^{th} periodicity, where a is greater than 0, and b is greater than 0.

In this embodiment of this application, a weight is assigned to a related thread, and the weight of the related thread is adaptively adjusted in running to each periodicity of the first thread. This provides a basis for subsequently dynamically updating a key thread list based on a change of the weight of the related thread. Therefore, an identification result of the key thread is adaptive to a change of a running status of the first thread, thereby further improving accuracy of identifying the key thread.

With reference to the second aspect, in a possible implementation, the preprocessing module is further configured to exclude a first-type thread in the one or more second threads corresponding to the (i+1)^{th} periodicity, where the first-type thread includes a high-priority thread and/or a reusable thread.

In this embodiment of this application, in each periodicity of the first thread, before the key thread list is determined, a thread that does not need performance assurance and that is in other threads related to the first thread can be excluded, so that all key threads in the finally obtained key thread list are threads that actually affect running performance of a frame drawing thread and that need performance assurance, thereby avoiding misidentification of the key thread and unnecessary resource supply.

With reference to the second aspect, in a possible implementation, the update module is further specifically configured to: add, to the key thread list corresponding to the i^{th} periodicity, a thread whose weight value is greater than a first weight threshold in the candidate thread list corresponding to the (i+1)^{th} periodicity; and remove, from the key thread list corresponding to the i^{th} periodicity, a thread whose weight value is less than a second weight threshold in the candidate thread list corresponding to the (i+1)^{th} periodicity, where the first weight threshold is greater than or equal to the second weight threshold.

In an implementation, a thread whose weight value is greater than c in the candidate thread list corresponding to the (i+1)^{th} periodicity is added to the key thread list corresponding to the i^{th} periodicity; and a thread whose weight value is less than d in the candidate thread list corresponding to the (i+1)^{th} periodicity is removed from the key thread list corresponding to the i^{th} periodicity, where c≥d>0.

In this embodiment of this application, a weight is assigned to a related thread, and the weight of the related thread is adaptively adjusted in running to each periodicity of the first thread, so that a key thread list is dynamically updated based on a change of the weight of the related thread. Therefore, an identification result of the key thread is adaptive to a change of a running status of the first thread, thereby further improving accuracy of identifying the key thread.

With reference to the second aspect, in a possible implementation, the resource scheduling module is specifically configured to: increase resource supply for a thread in the key thread list corresponding to the i^{th} periodicity, and reduce resource supply for a thread outside the key thread list corresponding to the i^{th} periodicity; or performing resource scheduling based on the key thread list corresponding to the (i+1)^{th} periodicity includes: increasing resource supply for a thread in the key thread list corresponding to the (i+1)^{th} periodicity, and reducing resource supply for a thread outside the key thread list corresponding to the (i+1)^{th} periodicity.

In this embodiment of this application, after the key thread list of the first thread is determined, targeted resource supply is provided for the thread in the key thread list, to improve rationality of resource allocation and timeliness and effectiveness of resource supply, thereby ensuring running efficiency of the first thread.

With reference to the second aspect, in a possible implementation, the resource scheduling module is further specifically configured to provide resource supply for a thread in the key thread list at levels.

In this embodiment of this application, key threads in a key thread list are divided into levels based on weights of the key threads, and different weight intervals correspond to different resource scheduling levels, to implement hierarchical resource supply management and control for the key threads, so that resource supply can better match an actual requirement of the thread. In this way, resource scheduling is more rational, thereby improving running performance of the first thread and avoiding a waste of system resources to some extent.

With reference to the second aspect, in a possible implementation, the first weight is equal to a₁ when i is less than or equal to a first periodicity threshold, and the first weight is equal to a₂ when i is greater than the first periodicity threshold, where a₁>a₂>0.

In this embodiment of this application, a weight of a candidate thread identified in a current periodicity is increased in several previous periodicities of the first thread, so that these candidate threads can more quickly reach a key thread identification threshold. Therefore, the system can more quickly identify the key thread, thereby improving timeliness of resource scheduling.

With reference to the second aspect, in a possible implementation, the first thread is a frame drawing thread.

In an implementation, a duration of a periodicity of the frame drawing thread may be a duration corresponding to drawing a frame of image by the frame drawing thread.

Optionally, the first thread is a frame drawing thread of a third-party application.

In this embodiment of this application, the solutions of this application are applied to a frame drawing scenario (for example, a frame drawing scenario of the third-party application), to improve running performance of the frame drawing thread, thereby improving smoothness of a drawing process of the system.

According to a third aspect, an electronic device is provided. The electronic device includes a memory and a processor, the memory is configured to store computer program code, and the processor is configured to execute the computer program code stored in the memory, to implement the method according to the first aspect or any one of the possible implementations of the first aspect, and/or implement the method according to the second aspect or any one of the possible implementations of the second aspect.

According to a fourth aspect, a computer-readable storage medium is provided. The computer-readable storage medium stores a computer program or instructions. When the computer program or the instructions are executed, the method according to the first aspect or any one of the possible implementations of the first aspect is implemented, or the method according to the second aspect or any one of the possible implementations of the second aspect is implemented.

According to a fifth aspect, a chip is provided, where the chip stores instructions. When the instructions are run on a device, the chip is enabled to perform the method according to the first aspect or any one of the possible implementations of the first aspect or the method according to the second aspect or any one of the possible implementations of the second aspect.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a schematic flowchart of an existing resource scheduling method;
FIG. 4 is a diagram of a relationship between threads according to an embodiment of this application;
FIG. 5 is a schematic flowchart of a resource scheduling method according to an embodiment of this application;
FIG. 6 is a schematic flowchart of another resource scheduling method according to an embodiment of this application;
FIG. 7 is a schematic flowchart of another resource scheduling method according to an embodiment of this application;
FIG. 8 is a schematic flowchart of another resource scheduling method according to an embodiment of this application;
FIG. 9 is a schematic flowchart of another resource scheduling method according to an embodiment of this application;
FIG. 10 is a schematic flowchart of another resource scheduling method according to an embodiment of this application;
FIG. 11 is a diagram of a key thread identification process according to an embodiment of this application;
FIG. 12 is a diagram of functional modules of a resource scheduling apparatus according to an embodiment of this application; and
FIG. 13 is a diagram of a system architecture corresponding to a resource scheduling method according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects.

Reference to "one embodiment", "some embodiments", or the like described in this specification means that one or more embodiments of this application include a specific feature, structure, or characteristic described with reference to the embodiments. Therefore, the statements "an embodiment", "some embodiments", "another embodiment", "some other embodiments", and the like that appear in different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The method provided in embodiments of this application may be applied to an electronic device installed with an operating system. The electronic device may be, for example, a mobile phone, a tablet computer, a wearable device, an in-vehicle device, an augmented reality (augmented reality, AR) device/a virtual reality (virtual reality, VR) device, a notebook computer, an ultra mobile personal computer (ultra-mobile personal computer, UMPC), a netbook, or a personal digital assistant (personal digital assistant, PDA). A specific type of the electronic device is not limited in embodiments of this application.

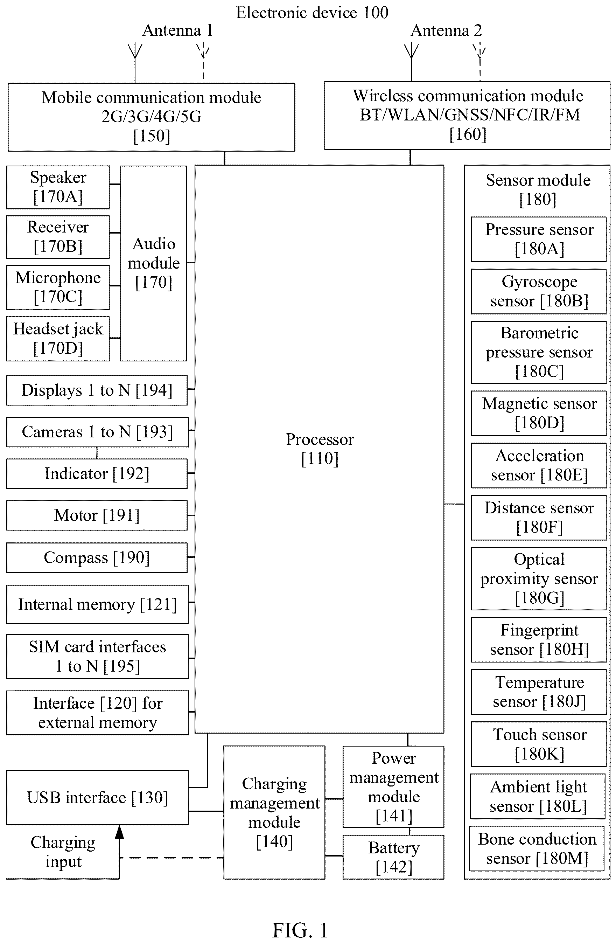

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI interface, to implement a shooting function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may be alternatively configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. Alternatively, the interface may be configured to connect to another electronic device such as an AR device.

It may be understood that an interface connection relationship between modules that is illustrated in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (leakage and impedance). In some other embodiments, the power management module 141 may be alternatively disposed in the processor 110. In some other embodiments, the power management module 141 and the charging management module 140 may be alternatively disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an App required by at least one function (for example, a sound playing function or an image playing function), and the like. The data storage area may store data (for example, audio data or an address book) and the like created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and sound recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to receive a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an application icon of Messages, an instruction for checking a message is performed. When a touch operation whose touch operation intensity is greater than or equal to the first pressure threshold is performed on the application icon of Messages, an instruction for creating a new message is performed.

The gyroscope sensor 180B may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover or a leather case by using the magnetic sensor 180D. In some embodiments, when the electronic device 100 is a clamshell phone, the electronic device 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during shooting. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may be alternatively disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or different types. The SIM card interface 195 may be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an embedded-SIM (embedded-SIM, eSIM) card, namely, an embedded-SIM card. The eSIM card may be embedded in the electronic device 100, and cannot be separated from the electronic device 100.

It should be understood that a calling card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

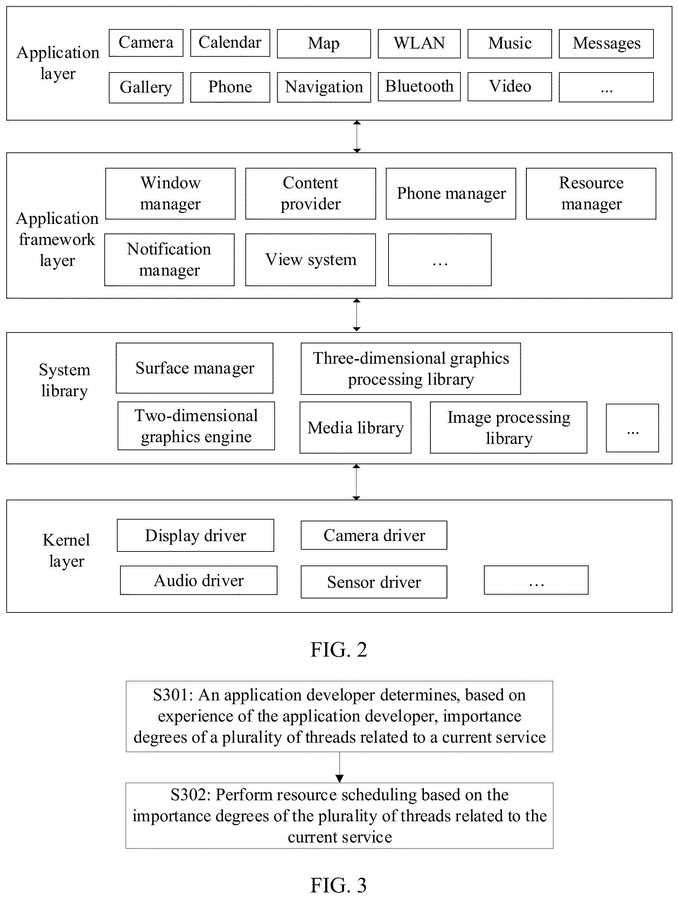

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, Android runtime (Android runtime) and a system library, and a kernel layer. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

In an operating system, when an application runs, a large quantity of threads are created to process a related service. A frame drawing scenario is used as an example. In a process of executing a frame drawing service, a plurality of threads related to the frame drawing service are created. Among the threads related to the frame drawing service, there are some key threads, for example, threads responsible for drawing and rendering. Running speeds of the threads related to the frame drawing service directly affect execution of main logic and a frame drawing speed of the frame drawing service. When resource supply for the threads related to the frame drawing service is insufficient, the application may respond slowly or even freeze, thereby affecting user experience.

Therefore, if resource supply of the key threads related to the task can be ensured, performance experience of the operating system can be greatly improved. In addition, in a task execution process, a part of non-key threads also exist in the plurality of threads related to the task. These non-key threads have little impact on the task execution process. Running of these non-key threads may be delayed. Because resources of the operating system are limited, it is difficult for all the threads to obtain relatively high supply. Therefore, resource supply for these non-key threads can be reduced while sufficient resource supply is provided for the key threads.

Therefore, how to identify a key thread becomes a problem that needs to be urgently resolved currently.

For example, FIG. 3 is a schematic flowchart of an existing resource scheduling method 300. As shown in FIG. 3, the method 300 includes the following steps.

S301: An application developer determines, based on experience of the application developer, importance degrees of a plurality of threads related to a current service.

Specifically, the application developer determines, based on understanding of an application running status and an operating system, a more important thread in a running process of the current service, to subjectively determine the importance degrees of the plurality of threads related to the current service.

S302: Perform resource scheduling based on the importance degrees of the plurality of threads related to the current service.

Specifically, resource scheduling is implemented for the threads through adjusting priorities of the plurality of threads related to the current service, groups of the plurality of threads related to the current service, and the like.

In the method, identification of a key thread depends on a subjective determining capability of the application developer, and omission or misidentification is inevitable. In addition, a requirement on knowledge of the developer in the operating system field is high, causing unfriendly developer experience. In addition, the application developer can identify only a key thread in an application, and when the application runs in the operating system, cannot identify a key thread that is outside the application and on which the application depends. In addition, in a running process of the application, a key thread related to an application running task may change. Update of the key thread cannot be identified in time through manual identification. Consequently, a resource scheduling policy does not match an actual requirement.

In view of this, this application provides a resource scheduling method and apparatus, and an electronic device. In the method, in a running process of an application, a key thread related to a running task is determined, based on actual occurrence probability and impact of threads related to the running task in the running process, from the threads related to the running task. A process of identifying the key thread is completed in a system by using an identification algorithm, and does not depend on subjective determining of an application developer. By using the method, the apparatus, and the electronic device, the key thread related to the running task can be accurately identified, and resource supply can be preferentially guaranteed for the determined key thread, to achieve better resource scheduling, thereby improving a running speed and running performance of the running task.

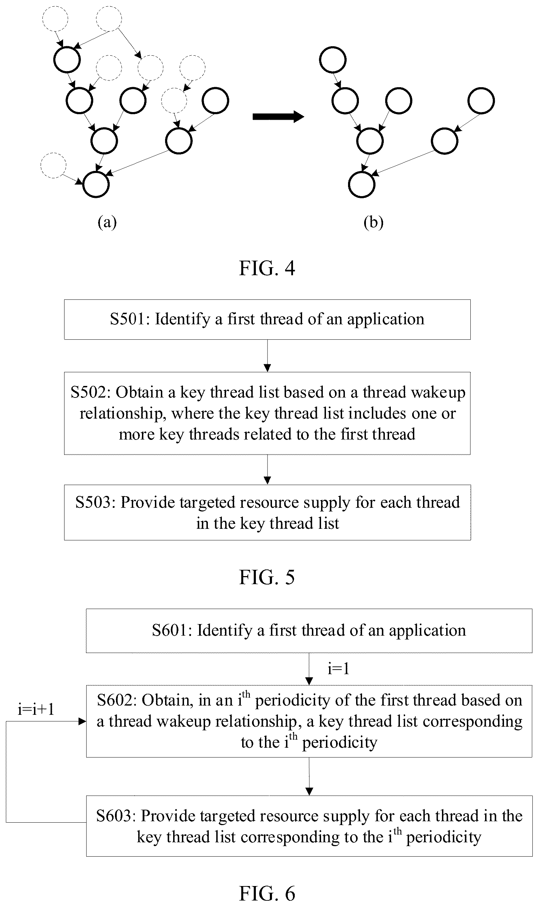

For example, FIG. 4 is a diagram of a relationship between threads according to an embodiment of this application.

As shown in FIG. 4, a relationship between threads in a system is usually indicated in a tree shape or a mesh shape. Not all threads in the tree-shaped or mesh-shaped threads affect running performance of a current task. (a) in FIG. 4 shows a plurality of threads related to the current task of an application. In the plurality of threads, a thread that greatly affects the running performance of the current task is represented by a solid-line circle in (a) in FIG. 4. In the plurality of threads, a thread that has no impact on the running performance of the current task or has little impact on the running performance of the current task is represented by a dashed-line circle in (a) in FIG. 4. According to the resource scheduling method provided in embodiments of this application, the thread that has no impact on the running performance of the current task or has little impact on the running performance of the current task in the plurality of threads related to the current task of the application can be filtered out, to obtain key threads shown in (b) in FIG. 4. In this way, a resource scheduling policy is determined, to improve resource supply for the key threads.

For example, FIG. 5 is a schematic flowchart of a resource scheduling method 500 according to an embodiment of this application. As shown in FIG. 5, the method 500 includes the following steps.

S501: Identify a first thread of an application.

In some embodiments, instrumentation is implemented in a function that needs to be called in a running process of the first thread, to identify the first thread.

In some other embodiments, identification information of the first thread is identified, to identify the first thread.

Instrumentation indicates to insert a probe into a program while ensuring original program logic integrity, collect information (such as a method, a method parameter value, and a return value) in code by using the probe, and insert a code segment at a specific location of the program, to collect dynamic context information during program running.

S502: Obtain a key thread list based on a thread wakeup relationship, where the key thread list includes one or more key threads related to the first thread.

The one or more key threads related to the first thread may be understood as one or more threads that have key impact on running of the first thread.

In an implementation, the running process of the first thread corresponds to a plurality of periodicities (running periodicities). In each periodicity of the first thread, a key thread list corresponding to a current periodicity is obtained based on a thread wakeup relationship; or in every several periodicities of the first thread, key thread lists corresponding to current several periodicities are obtained based on thread wakeup relationships.

Step S502 occurs in a system kernel.

It should be understood that thread wakeup relationships corresponding to different periodicities of the first thread may be different. In other words, a correspondence exists between the thread wakeup relationship and the periodicity of the first thread. The thread wakeup relationship means an association relationship between the first thread and another thread. For the association relationship between the first thread and the another thread, refer to FIG. 4 and the description part of FIG. 4. The thread wakeup relationship can be directly obtained from a system.

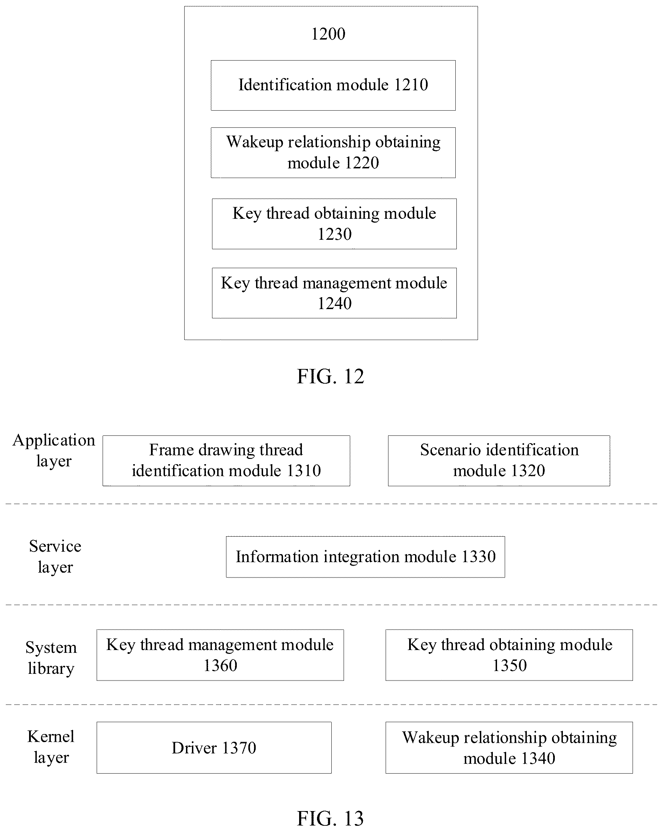

The thread wakeup relationship is directly obtained from the system. For example, the thread wakeup relationship may be obtained by invoking an interface of another functional module (for example, a wakeup relationship obtaining module 1230 shown in FIG. 12) of the operating system.

S503: Provide targeted resource supply for each thread in the key thread list.

In some embodiments, resource supply for the thread in the key thread list is increased, and resource supply for a non-key thread (that is, a thread that is not in the key thread list) is reduced.

Optionally, the first thread may be a frame drawing thread, and a duration of one periodicity of the first thread may be a duration corresponding to drawing of one frame of image by the frame drawing thread. In addition, the first thread may be any other thread. This is not limited in this application.

In this embodiment of this application, in a system, a key thread related to a running task is determined, based on a thread wakeup relationship, from threads related to the running task. A process of identifying the key thread does not depend on subjective determining of an application developer, and the key thread related to the running task can be accurately identified, so that resource supply can be preferentially ensured for the determined key thread, to achieve better resource scheduling.

For example, FIG. 6 is a schematic flowchart of another resource scheduling method 600 according to an embodiment of this application. As shown in FIG. 6, the method 600 includes the following steps.

S601: Identify a first thread of an application.

An explanation of step S601 is the same as an explanation of S501 in the embodiment shown in FIG. 5. For brevity, details are not described herein again.

S602: Obtain, in an i^{th} periodicity of a first thread based on a thread wakeup relationship, a key thread list corresponding to the i^{th} periodicity, where the key thread list includes one or more key threads related to the first thread, an initial value of i is 1, and i is a positive integer greater than or equal to 1.

Specifically, it may be described as follows: In the i^{th} periodicity of the first thread, the key thread list corresponding to the i^{th} periodicity is obtained based on the thread wakeup relationship corresponding to the i^{th} periodicity, where the key thread list includes the one or more key threads related to the first thread.

The first thread has a plurality of running periodicities. The i^{th} periodicity of the first thread may indicate an i^{th} running periodicity of the first thread, or may indicate a specific quantity of running periodicities of the first thread (for example, every three running periodicities are one periodicity of the first thread). A time length of the running periodicity may be determined by a system.

An explanation of step S602 is similar to an explanation of S502 in the embodiment shown in FIG. 5. For brevity, details are not described herein again.

S603: Provide targeted resource supply for each thread in the key thread list corresponding to the i^{th} periodicity; and when running of the first thread in the i^{th} periodicity ends and the first thread starts to run in an (i+1)^{th} periodicity, make i=i+1, and return to step S602, where i is a natural number, and i=1, 2, 3, 4, ....

In some embodiments, resource supply for the thread in the key thread list corresponding to the i^{th} periodicity is increased, and resource supply for a non-key thread (that is, a thread that is not in the key thread list corresponding to the i^{th} periodicity) is reduced.

In this embodiment of this application, in each periodicity of the first thread, one or more key threads corresponding to the periodicity are determined based on a thread wakeup relationship corresponding to the periodicity. In this way, the key thread list can be updated in time, so that resource scheduling has better real-time performance, thereby further improving smoothness of the system.

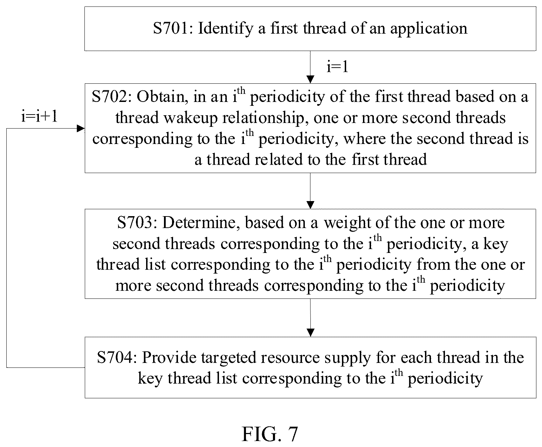

For example, FIG. 7 is a schematic flowchart of another resource scheduling method 700 according to an embodiment of this application. As shown in FIG. 7, the method 700 includes the following steps.

S701: Identify a first thread of an application.

An explanation of step S701 is the same as an explanation of S501 in the embodiment shown in FIG. 5. For brevity, details are not described herein again.

S702: Obtain, in an i^{th} periodicity of the first thread based on a thread wakeup relationship, one or more second threads corresponding to the i^{th} periodicity, where the second thread is a thread related to the first thread.

It should be understood that the i^{th} periodicity of the first thread is the i^{th} periodicity of the first thread.

The one or more key threads related to the first thread may be understood as one or more threads that have impact on running of the first thread.

In an implementation, the running process of the first thread corresponds to a plurality of periodicities (running periodicities). In each periodicity of the first thread, one or more second threads corresponding to a current periodicity are obtained based on a thread wakeup relationship; or in every several periodicities of the first thread, one or more second threads corresponding to current several periodicities are obtained based on thread wakeup relationships.

Step S702 occurs in a system kernel.

It should be understood that thread wakeup relationships corresponding to different periodicities of the first thread may be different. In other words, a correspondence exists between the thread wakeup relationship and the periodicity of the first thread. The thread wakeup relationship means an association relationship between the first thread and another thread. For the association relationship between the first thread and the another thread, refer to FIG. 4 and the description part of FIG. 4. The thread wakeup relationship can be directly obtained from a system.

The thread wakeup relationship is directly obtained from the system. For example, the thread wakeup relationship may be obtained by invoking an interface of another functional module (for example, a wakeup relationship obtaining module 1230 shown in FIG. 12) of the operating system.

S703: Determine, based on a weight of the one or more second threads corresponding to the i^{th} periodicity, a key thread list corresponding to the i^{th} periodicity from the one or more second threads corresponding to the i^{th} periodicity.

Specifically, a weight of each of the one or more second threads corresponding to the i^{th} periodicity is determined based on a corresponding frequency of each of the one or more second threads corresponding to the i^{th} periodicity in i periodicities of the first thread, where the i periodicities of the first thread include the i^{th} periodicity and i-1 periodicities before the i^{th} periodicity of the first thread.

In an example, the first thread runs to a third periodicity, a second thread A is a thread related to the first thread in both a first periodicity and the third periodicity and is not a thread related to the first thread in a second periodicity, and a second thread B is a thread related to the first thread only in the third periodicity and is not a thread related to the first thread in the first periodicity and the second periodicity. In this case, the second thread A corresponds to the first periodicity and also corresponds to the third periodicity, a corresponding frequency of the second thread A in the three periodicities of the first thread is 2/3, the second thread B corresponds to only the third periodicity, and a corresponding frequency of the second thread B in the three periodicities of the first thread is 1/3. Therefore, in the third periodicity of the first thread, a weight of the second thread A is greater than a weight of the second thread B.

In some embodiments, when a weight of a second thread C in the one or more second threads reaches a first weight threshold, the second thread C is added to the key thread list.

Similarly, when a weight of a second thread D in the key thread list is less than a second weight threshold, the second thread D is removed from the key thread list.

It should be understood that step S703 is performed when the first thread runs to each periodicity. In other words, as a quantity of periodicities of the first thread increases (that is, i increases), a corresponding frequency of each of the one or more second threads in i periodicities of the first thread may change, and a weight of the second thread may also change, thereby finally dynamically updating the key thread list. S704: Provide targeted resource supply for each thread in the key thread list corresponding to the i^{th} periodicity; and when running of the first thread in the i^{th} periodicity ends and the first thread starts to run in an (i+1)^{th} periodicity, make i=i+1, and return to step S702.

In some embodiments, resource supply for a thread in the key thread list corresponding to the i^{th} periodicity is increased, and resource supply for a non-key thread is reduced.

In this embodiment of this application, in the system, a key thread related to a running task is determined from threads related to the running task by using an identification algorithm (a weight algorithm). A process of identifying the key thread does not depend on subjective determining of an application developer, and the key thread related to the running task can be accurately identified, so that resource supply can be preferentially ensured for the determined key thread, to achieve better resource scheduling. In addition, the key thread is identified in each periodicity of the running task, and the key thread is determined based on occurrence probability and impact of the threads related to the running task in a plurality of periodicities, to improve stability of identifying the key thread and update the key thread in time.

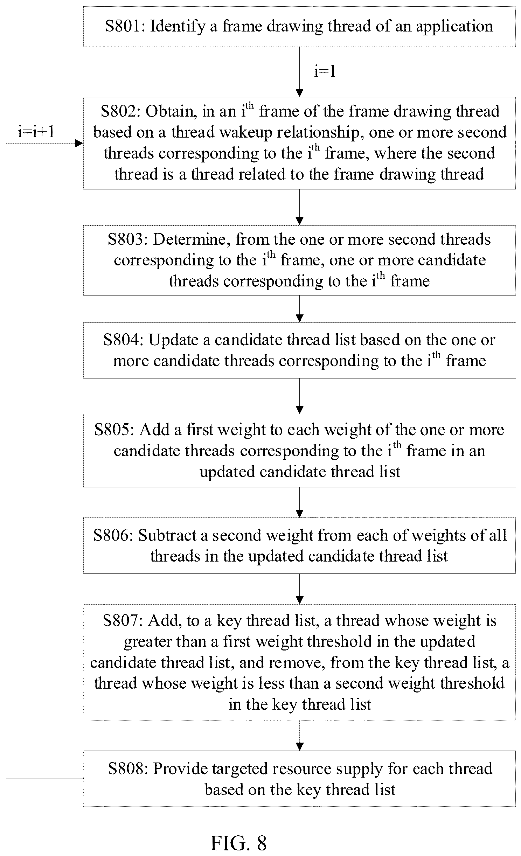

For example, a first thread is a frame drawing thread. FIG. 8 is a schematic flowchart of another resource scheduling method 800 according to an embodiment of this application. As shown in FIG. 8, the method 800 includes the following steps.

S801: Identify a frame drawing thread of an application.

A frame drawing scenario of a third-party application is used as an example. A frame drawing thread of the application is identified through instrumentation in a queuebuffer function.

The queuebuffer function is a function used to transmit frame drawing data. Call of the queuebuffer function is an inevitable process of a frame drawing process. It should be understood that each frame corresponds to one queuebuffer function. When an image needs to be drawn, the queuebuffer function is called to obtain and transmit a drawing element corresponding to a current frame.

In other words, the queuebuffer function is usually used in the frame drawing scenario of the third-party application (for example, an image rendering scenario), and is specifically used to obtain, through drawing logic calculation on the current frame, the drawing element corresponding to the current frame, and transmit the drawing element corresponding to the current frame to a system driver, so that the system driver further performs a drawing operation on the current frame.

Instrumentation indicates to insert a probe into a program while ensuring original program logic integrity, collect information (such as a method, a method parameter value, and a return value) in code by using the probe, and insert a code segment at a specific location of the program, to collect dynamic context information during program running. For example, in this embodiment, instrumentation may be performed in the queuebuffer function. When an event in which the queuebuffer function is called to obtain the drawing element corresponding to the current frame occurs, the frame drawing thread of the application can be identified.

A thread is a minimum unit that an operating system can perform computing and scheduling. The thread is included in a process and is an actual operating unit of the process. One thread is a single sequential control flow in a process. One process may have a plurality of concurrent threads, and the threads execute different tasks in parallel. The frame drawing thread is a thread used to perform a frame drawing operation.

In an example, an application is located on a first chat interface. After the application receives a first message, the interface changes to a second chat interface. The first chat interface and the second chat interface may be considered as two frames of the application, and a thread used to draw the two frames in the system is a frame drawing thread.

S802: Obtain, in an i^{th} frame of the frame drawing thread (which may also be described as when the frame drawing thread is used to draw the i^{th} frame) based on a thread wakeup relationship, one or more second threads corresponding to the i^{th} frame, where the second thread is a thread related to the frame drawing thread, i is a positive integer greater than or equal to 1, and an initial value of i is 1.

The one or more second threads related to the frame drawing thread may be understood as one or more threads that have impact on running of the frame drawing thread.

Specifically, the frame drawing thread corresponds to a plurality of frames. In each frame corresponding to the frame drawing thread, one or more second threads that are related to the frame drawing thread and that correspond to the current frame are obtained based on a thread wakeup relationship.

Specifically, in the i^{th} frame of the frame drawing thread, the one or more second threads corresponding to the i^{th} frame are obtained based on the thread wakeup relationship corresponding to the i^{th} frame.

The thread wakeup relationship in this step corresponds to the frame drawing thread, and is an association relationship between the frame drawing thread and another thread. For the association relationship between the frame drawing thread and the another thread, refer to FIG. 4 and the description part of FIG. 4. The thread wakeup relationship can be directly obtained from the system.

Optionally, different frames of the frame drawing thread correspond to different thread wakeup relationships. In other words, a correspondence exists between the thread wakeup relationship and the frame of the frame drawing thread.

The thread wakeup relationship is directly obtained from the system. For example, the thread wakeup relationship may be obtained by invoking an interface of another functional module (for example, a wakeup relationship obtaining module 1230 shown in FIG. 12) of the operating system.

In this step, the one or more second threads related to running of the frame drawing thread are identified based on the thread wakeup relationship, so that another thread that actually affects running of the frame drawing thread can be accurately found.

S803: Determine, from the one or more second threads corresponding to the i^{th} frame, one or more candidate threads corresponding to the i^{th} frame. Specifically, the one or more second threads corresponding to the i^{th} frame are screened, and a first-type thread is removed from the one or more second threads corresponding to the i^{th} frame, to obtain the one or more candidate threads corresponding to the i^{th} frame.

In some embodiments, the first-type thread is a thread that is not related to performance assurance of the frame drawing thread. The first-type thread may include one or more of a real-time (real time, RT) thread that has a high priority in terms of a supply capability, a binder thread that can be reused by another module in the system, and a kworker thread that can be reused by another module in the system. In addition, the first-type thread may further include another thread that is not related to performance assurance of the frame drawing thread (for example, another thread that can be reused by another module in the system). This is not limited in this application.

The system may directly determine, based on a task type, whether a thread is a first-type thread.

In this step, all key threads in the finally obtained key thread list are threads that actually affect running performance of the frame drawing thread and that need performance assurance, thereby avoiding misidentification of the key thread and unnecessary resource supply.

S804: Update a candidate thread list based on the one or more candidate threads corresponding to the i^{th} frame.

In some embodiments, when i=1, an empty candidate thread list is created, and the one or more candidate threads corresponding to the i^{th} frame are all added to the candidate thread list, to obtain an updated candidate thread list (which may also be described as a candidate thread list corresponding to the i^{th} frame). The updated candidate thread list is not specifically a candidate thread list corresponding to a specific frame, but a candidate thread list obtained in latest update.

In some other embodiments, when i is greater than 1, a thread that is in the one or more candidate threads corresponding to the i^{th} frame and that does not exist in the candidate thread list (which may also be described as a candidate thread list corresponding to the (i-1)^{th} frame) is added to the candidate thread list (which may also be described as the candidate thread list corresponding to the (i-1)^{th} frame), to obtain an updated candidate thread list (which may also be described as the candidate thread list corresponding to the i^{th} frame).

S805: Add a first weight to each weight of the one or more candidate threads corresponding to the i^{th} frame in the updated candidate thread list.

In an implementation, the weight is represented by a weight value. This step may be replaced with: adding a to a weight value of the one or more candidate threads corresponding to the i^{th} frame in the updated candidate thread list, where a>0.

In some embodiments, a value of a may be 2.

In another implementation, after the first weight is added to each weight of the one or more candidate threads corresponding to the i^{th} frame, the candidate thread list is updated based on the candidate thread list corresponding to the i^{th} frame.

It should be understood that the first weight is added to each weight of the one or more candidate threads determined from the one or more second threads obtained from the current frame (the i^{th} frame).

The candidate thread list includes the one or more candidate threads obtained in the current frame (the i^{th} frame), and further includes one or more candidate threads obtained from all frames before the current frame (the i^{th} frame).

S806: Subtract a second weight from each of weights of all the candidate threads in the updated candidate thread list.

In an implementation, the weight is represented by a weight value. This step may be replaced with: subtracting b from weight values of all the candidate threads in the updated candidate thread list, where b>0.

In some embodiments, a value of b may be 1.

In an example, the current frame (the i^{th} frame) is a 3^{rd} frame, a candidate thread list corresponding to a 2^{nd} frame includes 10 candidate threads, the 3^{rd} frame corresponds to five candidate threads, and three of the five candidate threads do not exist in the candidate thread list corresponding to the 2^{nd} frame. In this case, the three candidate threads are added to the candidate thread list corresponding to the 2^{nd} frame, to obtain an updated candidate thread list (that is, a candidate thread list corresponding to the 3^{rd} frame). The updated candidate thread list includes 13 candidate threads. A process of determining a weight of a thread in the updated candidate thread list is: adding the first weight (for example, adding a) to each of weight values of the five candidate threads that are in the updated candidate thread list and that correspond to the 3^{rd} frame, and subtracting the second weight (for example, subtracting b) from each of weights of all the candidate threads in the updated candidate thread list.

It should be noted that after a thread A in the candidate thread list is added to the key thread list, the thread A still exists in the candidate thread list, and participates in a weight change process together with another candidate thread in the candidate thread list. When a weight of the thread A in the candidate thread list changes, a weight of the thread A in the key thread list synchronously changes.

By analogy, when the frame drawing thread draws each frame, the weight of the candidate thread in the candidate thread list may change. In this way, a weight of a thread with a high occurrence frequency in a plurality of frames may gradually increase, to accurately identify a key thread.

S807: Add, to the key thread list, a thread whose weight is greater than a first weight threshold in the updated candidate thread list, and remove, from the key thread list, a thread whose weight is less than a second weight threshold in the key thread list, where the first weight threshold is greater than or equal to the second weight threshold.

In an implementation, the weight is represented by a weight value. This step may be replaced with: adding, to the key thread list, a thread whose weight value is greater than c in the updated candidate thread list, and removing, from the key thread list, a thread whose weight value is less than d in the key thread list, where c≥d>0.

In an example, the current frame (the i^{th} frame) is a 3^{rd} frame, a candidate thread list corresponding to a 2^{nd} frame includes 10 candidate threads, the 3^{rd} frame corresponds to five candidate threads, and three of the five candidate threads do not exist in the candidate thread list corresponding to the 2^{nd} frame. In this case, the three candidate threads are added to the candidate thread list corresponding to the 2^{nd} frame, to obtain an updated candidate thread list (that is, a candidate thread list corresponding to the 3^{rd} frame). The updated candidate thread list includes 13 candidate threads. A process of determining a weight of a thread in the updated candidate thread list is: adding the first weight (for example, adding a) to each of weights of the five candidate threads that are in the updated candidate thread list and that correspond to the 3^{rd} frame, and subtracting the second weight (for example, subtracting b) from each of weights of all the candidate threads in the updated candidate thread list. Then, the key thread list is updated based on weights of the 13 candidate threads in the updated candidate thread list. A specific update process is: adding, to the key thread list, the thread whose weight is greater than the first weight threshold (for example, greater than c) in the updated candidate thread list, and removing, from the key thread list, the thread whose weight is less than the second weight threshold (for example, less than d) in the key thread list.

In some embodiments, a value of c may be 10.

A value of d is less than or equal to c. For example, the value of d may be 5.

It should be understood that the "frame" described in this embodiment of this application is a minimum unit of a single image picture in an image animation, and is equivalent to each shot on a filmstrip. One frame is one static picture. Consecutive frames form an animation, such as television pictures.

In an example, an application is located on a first chat interface. After the application receives a first message, the interface changes to a second chat interface. The first chat interface and the second chat interface may be considered as two frames of the application.

It should be understood that, in this embodiment of this application, the third-party application is an application created by a developer, and the application is not a manufacturer of a device running the application or an owner of a website providing the application. For example, the third-party application may be an application downloaded and installed by a user from an application gallery or a webpage, or may be an application installed by the user after the user receives an installation package. The frame drawing scenario of the application is a drawing and rendering scenario of a display interface corresponding to the application, for example, drawing and rendering of a chat interface of a chat application, or drawing and rendering of a game interface of a game application.

It should be further understood that in this embodiment of this application, the frame drawing scenario of the application is used as an example for description, but this constitutes no limitation on a use scenario of the solutions of this application. The solutions of this application may be further used in a running process of another thread.

S808: Provide targeted resource supply for each thread based on the key thread list; and when running of the frame drawing thread in the i^{th} periodicity ends and the frame drawing thread starts to run in an (i+1)^{th} periodicity, assign i=i+1, and return to step S802.

Specifically, resource supply is increased for the thread in the key thread list, and resource supply is reduced for a non-key thread, so that system resources are inclined to the key thread, thereby ensuring running of the key thread and ensuring running of the frame drawing thread affected by the key thread.

It should be understood that, after frame drawing of the current frame ends, when drawing of a next frame starts, step S802 is performed again. In other words, step S802 to step S808 are performed in each frame in running of the frame drawing thread, so that a stable key thread call chain can be obtained, thereby improving stability of identifying the key thread. Weights of the candidate thread and the key thread are adjusted in each frame, so that the weights of the candidate thread and the key thread can be dynamically adjusted. Therefore, the key thread list can be updated in time.

In this embodiment of this application, in the system, a key thread related to a running task is determined from threads related to the running task by using an identification algorithm (a weight algorithm). A process of identifying the key thread does not depend on subjective determining of an application developer, and the key thread related to the running task can be accurately identified, so that resource supply can be preferentially ensured for the determined key thread, to achieve better resource scheduling. In addition, the key thread is identified in each frame of the running task, and the key thread is determined based on related probability and impact of the threads related to the running task in a plurality of frames, to improve stability of identifying the key thread and update the key thread in time. Further, a weight is assigned to a thread, the weight of the thread is adaptively adjusted in each frame, and a key thread list is dynamically updated based on a change of the weight of the thread, so that an identification result of the key thread adapts to a change of a running status of the frame drawing thread, thereby further improving accuracy of identifying the key thread.

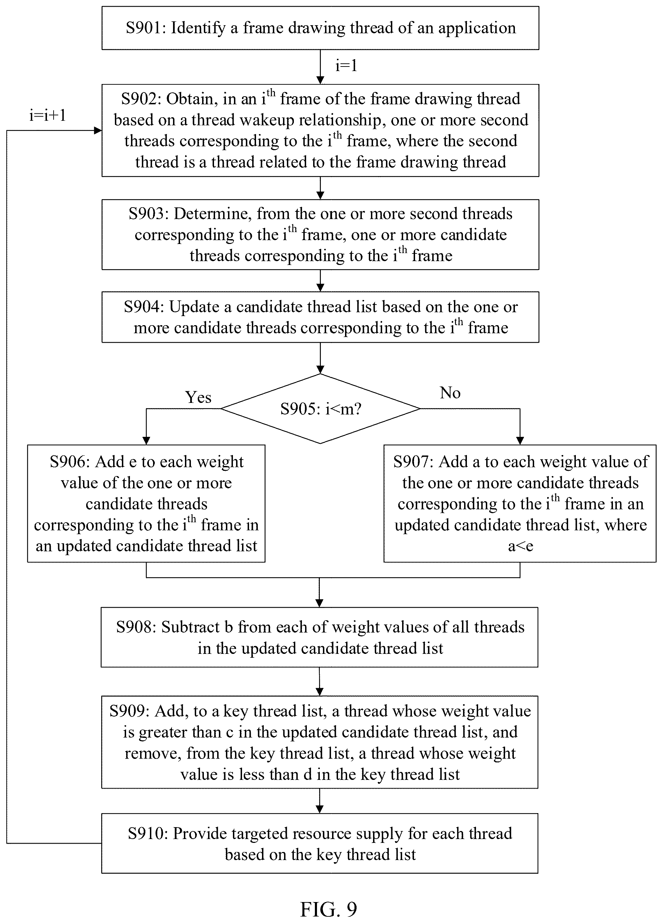

For example, a first thread is a frame drawing thread. FIG. 9 is a schematic flowchart of another resource scheduling method 900 according to an embodiment of this application. As shown in FIG. 9, the method 900 includes the following steps.

Step S901 to step S904 are the same as step S801 to step S804 in the embodiment shown in FIG. 8. For brevity, details are not described herein again.

S905: Determine whether a value of i is less than m; and if the value of i is less than m, perform step S905; or if the value of i is not less than m, perform step S906.

A value of m may be any positive integer from 1 to 10, for example, may be any value of 3, 5, and 7.

S906: Add e to each weight value of the one or more candidate threads corresponding to the i^{th} frame in an updated candidate thread list.

A value of e is greater than a value of a.

In some embodiments, the value of e may be 3.

In another implementation, after e is added to each weight value of the one or more candidate threads corresponding to the i^{th} frame, the candidate thread list is updated based on the candidate thread list corresponding to the i^{th} frame.

S907: Add a to each weight value of the one or more candidate threads corresponding to the i^{th} frame in the updated candidate thread list.

In some embodiments, the value of a may be 2.

In another implementation, after a is added to each weight value of the one or more candidate threads corresponding to the i^{th} frame, the candidate thread list is updated based on the candidate thread list corresponding to the i^{th} frame.

Step S908 to step S910 are the same as step S806 to step S808 in the embodiment shown in FIG. 8. For brevity, details are not described herein again.

In this embodiment of this application, in a specific scenario (for example, in several previous periodicities of the first thread or in a scenario of identifying a key thread for the first time), a weight value of a candidate thread identified in a periodicity corresponding to the scenario is further increased, so that these candidate threads can more quickly reach a key thread identification threshold. Therefore, the system can more quickly identify the key thread, thereby improving timeliness of resource scheduling.

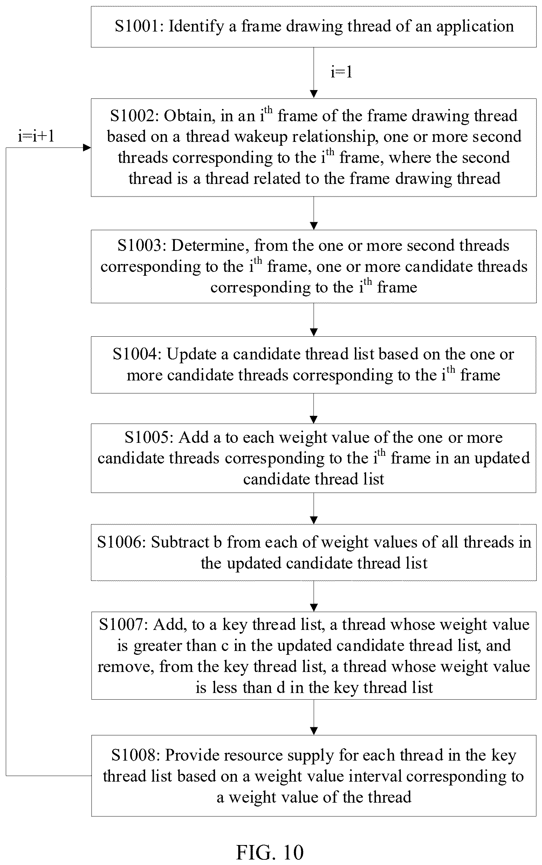

For example, a first thread is a frame drawing thread. FIG. 10 is a schematic flowchart of another resource scheduling method 1000 according to an embodiment of this application. As shown in FIG. 10, the method 1000 includes the following steps.

Step S1001 to step S1007 are the same as step S801 to step S807 in the embodiment shown in FIG. 8. For brevity, details are not described herein again.

S1008: For each thread in the key thread list, provide resource supply for the thread based on a weight value interval corresponding to a weight value of the thread; and when the i^{th} periodicity of the frame drawing thread ends and the frame drawing thread starts to run in an (i+1)^{th} periodicity, assign i=i+1, and return to step S1002.

In some embodiments, a plurality of weight value intervals are created based on magnitudes of weight values. The plurality of weight value intervals are in one-to-one correspondence with a plurality of resource scheduling levels. A greater weight value of a weight value interval corresponds to a higher resource scheduling level. For example, an interval of a weight value from f to g corresponds to a first level, an interval of a weight value from h to i corresponds to a second level, and an interval of a weight value from j to k corresponds to a third level. Resource supply for the first level is higher than resource supply for the second level, and the resource supply for the second level is higher than resource supply for the third level. A value relationship among weight values f, g, h, i, j and k is f>g>h>i>j>k.

In an implementation, a value of k may be less than or equal to a value of d.

In another implementation, a value of k may be less than or equal to a value of c.

Values of f, g, h, i, j and k may be determined based on distribution ranges of the weight values of the threads in the key thread list, or may be determined by the system based on a resource supply capability of the system. This is not limited in this application.

In some other embodiments, all the key threads in the key thread list are sorted in descending order of the weight values of the key threads, and all the sorted key threads are divided into a plurality of weight value intervals. The plurality of weight value intervals are in one-to-one correspondence with a plurality of resource scheduling levels. A greater weight value of a weight value interval corresponds to a higher resource scheduling level. For example, candidate threads whose weight values are sorted from 1 to A1 correspond to a first level, candidate threads whose weight values are sorted from A1 to A2 correspond to a second level, and candidate threads whose weight values are sorted from A2 to A3 correspond to a third level. Resource supply for the first level is higher than resource supply for the second level, and the resource supply for the second level is higher than resources for the third level.

Values of A1, A2, and A3 may be determined based on distribution ranges of the weight values of the threads in the key thread list, or may be determined based on a quantity of the threads in the key thread list, or may be determined by the system based on a resource supply capability of the system. This is not limited in this application.

It should be understood that, after frame drawing of the current frame ends, when drawing of a next frame starts, step S1002 is performed again. In other words, step S1002 to step S1008 are performed in each frame corresponding to the frame drawing thread, so that a stable key thread call chain can be obtained, thereby improving stability of identifying the key thread. The weight value of the thread is adjusted in each frame, so that the weight values of the threads in the candidate thread list can be dynamically adjusted. Therefore, the key thread list can be updated in time.

In this embodiment of this application, after the key thread is identified and the key thread list is determined, the key threads in the key thread list are divided into levels based on the weight values of the key threads, and different weight value intervals correspond to different resource scheduling levels, to implement hierarchical resource supply management and control for the key threads, so that resource supply can better match an actual requirement of the thread. In this way, resource scheduling is more rational, thereby improving running performance of a task of the application and avoiding a waste of system resources to some extent.

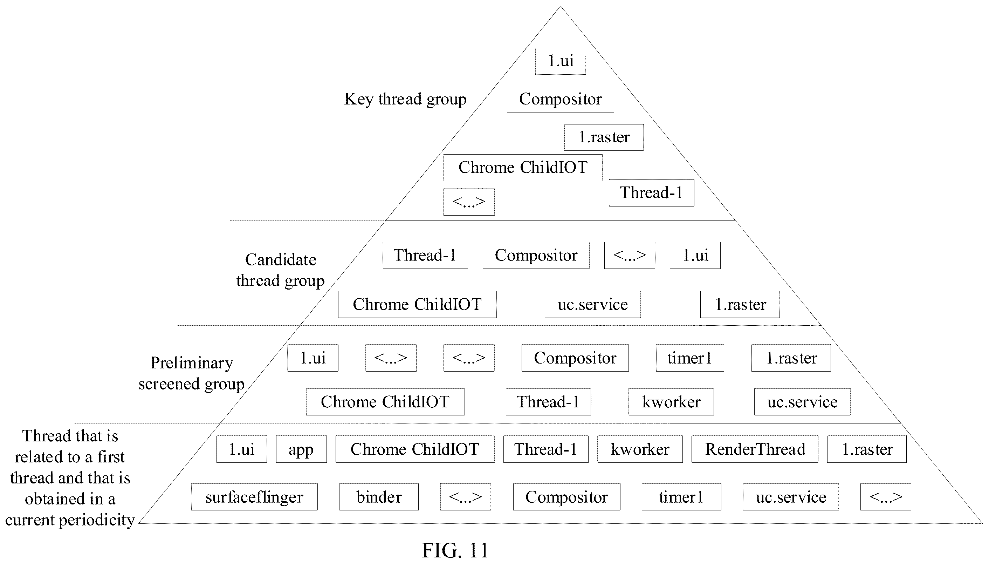

For example, FIG. 11 is a diagram of a key thread identification process according to an embodiment of this application.

As shown in FIG. 11, the key thread identification process may include the following steps.
(1) When a first thread of an application is identified, obtain, based on a thread wakeup relationship, one or more second threads that are related to the first thread and that correspond to an i^{th} periodicity of the first thread.

In an example, the one or more second threads that are related to the first thread and that correspond to the i^{th} periodicity include: 1.ui, app, Chrome ChildIOT, Thread-1, kworker, RenderThread, 1.raster, surfaceflinger, binder, <...>, Compositor, timer1, uc.service, and <...>.

(2) Determine, from the one or more second threads that are related to the first thread and that correspond to the i^{th} periodicity, one or more candidate threads corresponding to the i^{th} periodicity.

In an example, preliminary screening is first performed on the one or more second threads corresponding to the i^{th} periodicity, and a preliminary screened group is obtained after the preliminary screening and includes 1.ui, Chrome ChildIOT, Thread-1, kworker, 1.raster, <...>, Compositor, timer1, uc.service, and <...>. Then, further screening is performed on the threads in the preliminary screened group, to obtain one or more candidate threads corresponding to the i^{th} periodicity: 1.ui, Chrome ChildIOT, Thread-1, 1.raster, Compositor, uc.service, and <...>.

(3) Add the one or more candidate threads corresponding to the i^{th} periodicity to a candidate thread group.

If i is greater than 1, the candidate thread group includes the one or more candidate threads corresponding to the i^{th} periodicity, and further includes a candidate thread corresponding to each periodicity before the i^{th} periodicity.

In some embodiments, in step (3), a is added to each weight value of the one or more candidate threads corresponding to the i^{th} periodicity, and then the candidate threads are added to the candidate thread group; and then b is subtracted from each of the weight values of all the threads in the candidate thread group.

In some other embodiments, after the one or more candidate threads corresponding to the i^{th} periodicity are added to the candidate thread group, a is added to each weight value of the one or more candidate threads corresponding to the i^{th} periodicity; and then b is subtracted from each of the weight values of all the threads in the candidate thread group.

(4) Determine a key thread group based on the weight value of each thread in the candidate thread group.

In some embodiments, a thread whose weight value is greater than c in the candidate thread group is added to the key thread group, and a thread whose weight value is less than d in the key thread group is removed from the key thread group.

In an example, the key thread group determined from the candidate thread group includes 1.ui, Chrome ChildIOT, Thread-1, 1.raster, Compositor, and <...>.

For example, FIG. 12 is a diagram of functional modules of a resource scheduling apparatus 1200 according to an embodiment of this application. As shown in FIG. 12, the apparatus 1200 includes an identification module 1210, a wakeup relationship obtaining module 1220, a key thread obtaining module 1230, and a key thread management module 1240.

The identification module 1210 is configured to identify a first thread of an application.

In some embodiments, the identification module 1210 implements instrumentation in a function that needs to be called in a running process of the first thread, to identify the first thread.

In some other embodiments, the identification module 1210 identifies identification information of the first thread, to identify the first thread.

Instrumentation indicates to insert a probe into a program while ensuring original program logic integrity, collect information (such as a method, a method parameter value, and a return value) in code by using the probe, and insert a code segment at a specific location of the program, to collect dynamic context information during program running.

The wakeup relationship obtaining module 1220 is configured to obtain a thread wakeup relationship.

Specifically, the wakeup relationship obtaining module 1220 is configured to obtain, in an i^{th} periodicity of the first thread, a thread wakeup relationship corresponding to the i^{th} periodicity.

It should be understood that thread wakeup relationships corresponding to different periodicities of the first thread may be different. In other words, a correspondence exists between the thread wakeup relationship and the periodicity of the first thread. The thread wakeup relationship means an association relationship between the first thread and another thread. For the association relationship between the first thread and the another thread, refer to FIG. 4 and the description part of FIG. 4.

The key thread obtaining module 1230 is configured to obtain a key thread list based on the thread wakeup relationship. The key thread list includes one or more key threads related to the first thread.

The one or more key threads related to the first thread may be understood as one or more threads that have key impact on running of the first thread.

In an implementation, the running process of the first thread corresponds to a plurality of periodicities (running periodicities). In each running periodicity of the first thread, a key thread list corresponding to a current running periodicity is obtained based on a thread wakeup relationship; or in every several running periodicities of the first thread, key thread lists corresponding to current several running periodicities are obtained based on thread wakeup relationships.

In other words, the key thread obtaining module 1230 is specifically configured to obtain, based on a thread wakeup relationship corresponding to an i^{th} periodicity, a key thread list corresponding to the i^{th} periodicity.

The key thread management module 1240 is configured to provide targeted resource supply for each thread in the key thread list.

In some embodiments, the key thread management module 1240 is configured to: increase resource supply for the thread in the key thread list, and reduce resource supply for a non-key thread (that is, a thread that is not in the key thread list).

Optionally, the first thread may be a frame drawing thread, and a duration of one periodicity of the first thread may be a duration corresponding to drawing of one frame of image by the frame drawing thread. In addition, the first thread may be any other thread. This is not limited in this application.

The identification module 1210 is located at an application layer of an operating system, the wakeup relationship obtaining module 1220 is located at a kernel layer of the operating system, and the key thread obtaining module 1230 and the key thread management module 1240 are located in a system library of the operating system.

In this embodiment of this application, in the system, a key thread related to a running task is determined, based on an identification algorithm (weight value algorithm), from threads related to the running task. A process of identifying the key thread does not depend on subjective determining of an application developer, and the key thread related to the running task can be accurately identified, so that resource supply can be preferentially ensured for the determined key thread, to achieve better resource scheduling.

For example, the first thread is a frame drawing thread. FIG. 13 is a diagram of a system architecture corresponding to a resource scheduling method according to an embodiment of this application. As shown in FIG. 13, the system architecture includes a frame drawing thread identification module 1310, a scenario identification module 1320, an information integration module 1330, a wakeup relationship obtaining module 1340, a key thread obtaining module 1350, a key thread management module 1360, and a driver 1370. The frame drawing thread identification module 1310 and the scenario identification module 1320 may be located at an application layer. The information integration module 1330 may be located at a service layer (native layer). The key thread obtaining module 1350 and the key thread management module 1360 may be located in a system library (for example, a Huawei intelligent service: a hwsched service). The wakeup relationship obtaining module 1340 and the driver 1370 (for example, HISI VIO 2.0) may be located at a kernel layer. Details are as follows:

The frame drawing thread identification module 1310 is configured to identify a frame drawing thread of an application.

In some embodiments, the frame drawing thread of the application is identified through instrumentation in a queuebuffer function.

The queuebuffer function is a function used to transmit frame drawing data. Call of the queuebuffer function is an inevitable process of a frame drawing process. It should be understood that each frame corresponds to one queuebuffer function. When an image needs to be drawn, the queuebuffer function is called to obtain and transmit a drawing element corresponding to a current frame.

In other words, the queuebuffer function is usually used in the frame drawing scenario of the third-party application (for example, an image rendering scenario), and is specifically used to obtain, through drawing logic calculation on the current frame, the drawing element corresponding to the current frame, and transmit the drawing element corresponding to the current frame to a system driver, so that the system driver further performs a drawing operation on the current frame.

Explanations of the instrumentation and the frame drawing thread are described in detail in S801 in the embodiment shown in FIG. 8. For brevity, details are not described herein again.

The scenario identification module 1320 is configured to identify a frame drawing scenario of the application.

The information integration module 1330 serves as an interaction medium between each of the frame drawing thread identification module 1310 and the scenario identification module 1320 at the application layer, and each of the key thread identification module 1350 and the key thread management module 1360 in the system library.

In some embodiments, the information integration module 1330 is located in a surfaceflinger module.

The surfaceflinger module is a module that is in an operating system and that is responsible for managing and rendering an application interface.

The wakeup relationship obtaining module 1340 is configured to obtain a thread wakeup relationship.

Specifically, the wakeup relationship obtaining module 1340 is configured to: when the frame drawing thread draws an i^{th} frame, obtain a thread wakeup relationship corresponding to the i^{th} frame.

It should be understood that corresponding thread wakeup relationships when the frame drawing thread draws different frames may be different. In other words, a correspondence exists between the thread wakeup relationship and the frame of the frame drawing thread. The thread wakeup relationship means an association relationship between the frame drawing thread and another thread. For the association relationship between the frame drawing thread and the another thread, refer to FIG. 4 and the description part of FIG. 4.

The key thread obtaining module 1350 is configured to obtain, in the i^{th} frame of the frame drawing thread (which may also be described as when the frame drawing thread draws the i^{th} frame) based on a thread wakeup relationship, one or more second threads corresponding to the i^{th} frame, where the second thread is a thread related to the frame drawing thread, i is a positive integer greater than or equal to 1, and an initial value of i is 1.

The one or more second threads related to the frame drawing thread may be understood as one or more threads that have impact on running of the frame drawing thread.

Specifically, the frame drawing thread corresponds to a plurality of frames. In each frame corresponding to the frame drawing thread, the key thread obtaining module 1350 obtains, based on the thread wakeup relationship, the one or more second threads that are related to the frame drawing thread and that correspond to the current frame.

Specifically, in the i^{th} frame of the frame drawing thread, the key thread obtaining module 1350 obtains, based on the thread wakeup relationship corresponding to the i^{th} frame, the one or more second threads corresponding to the i^{th} frame.

The thread wakeup relationship in this step corresponds to the frame drawing thread, and is an association relationship between the frame drawing thread and another thread. For the association relationship between the frame drawing thread and the another thread, refer to FIG. 4 and the description part of FIG. 4.

Optionally, different frames of the frame drawing thread correspond to different thread wakeup relationships. In other words, a correspondence exists between the thread wakeup relationship and the frame of the frame drawing thread.

In this step, the key thread obtaining module 1350 identifies, based on the thread wakeup relationship, the one or more second threads related to running of the frame drawing thread, so that another thread that actually affects running of the frame drawing thread can be accurately found.

The key thread obtaining module 1350 is further configured to determine, from the one or more second threads corresponding to the i^{th} frame, one or more candidate threads corresponding to the i^{th} frame. Specifically, the key thread obtaining module 1350 screens the one or more second threads corresponding to the i^{th} frame, and removes a first-type thread from the one or more second threads corresponding to the i^{th} frame, to obtain the one or more candidate threads corresponding to the i^{th} frame.

In some embodiments, the first-type thread is a thread that is not related to performance assurance of the frame drawing thread. The first-type thread may include one or more of a real-time (real time, RT) thread that has a high priority in terms of a supply capability, a binder thread that can be reused by another module in the system, and a kworker thread that can be reused by another module in the system. In addition, the first-type thread may further include another thread that is not related to performance assurance of the frame drawing thread (for example, another thread that can be reused by another module in the system). This is not limited in this application.

The system may directly determine, based on a task type, whether a thread is a first-type thread.

In this step, all key threads in a finally obtained key thread list are threads that actually affect running performance of the frame drawing thread, thereby avoiding misidentification of the key thread and unnecessary resource supply.

The key thread obtaining module 1350 is further configured to update a candidate thread list based on the one or more candidate threads corresponding to the i^{th} frame.

In some embodiments, when i=1, an empty candidate thread list is created, and the one or more candidate threads corresponding to the i^{th} frame are all added to the candidate thread list, to obtain an updated candidate thread list (which may also be described as a candidate thread list corresponding to the i^{th} frame). The updated candidate thread list is not specifically a candidate thread list corresponding to a specific frame, but a candidate thread list obtained in latest update.

In some other embodiments, when i is greater than 1, a thread that is in the one or more candidate threads corresponding to the i^{th} frame and that does not exist in the candidate thread list (which may also be described as a candidate thread list corresponding to the (i-1)^{th} frame) is added to the candidate thread list (which may also be described as the candidate thread list corresponding to the (i-1)^{th} frame), to obtain an updated candidate thread list (which may also be described as the candidate thread list corresponding to the i^{th} frame).

The key thread obtaining module 1350 is further configured to add a to each weight value of the one or more candidate threads corresponding to the i^{th} frame in the updated candidate thread list.

In some embodiments, a value of a may be 2.

In another implementation, after a is added to each weight value of the one or more candidate threads corresponding to the i^{th} frame, the key thread obtaining module 1350 further updates the candidate thread list based on the candidate thread list corresponding to the i^{th} frame.

It should be understood that a is added to each weight value of the one or more candidate threads determined from the one or more second threads obtained from the current frame (the i^{th} frame).

The candidate thread list includes the one or more candidate threads obtained in the current frame (the i^{th} frame), and further includes one or more candidate threads obtained from all frames before the current frame (the i^{th} frame).

The key thread obtaining module 1350 is further configured to subtract b from each of weight values of all candidate threads in the updated candidate thread list.

In some embodiments, a value of b may be 1.

In an example, the current frame (the i^{th} frame) is a 3^{rd} frame, a candidate thread list corresponding to a 2^{nd} frame includes 10 candidate threads, the 3^{rd} frame corresponds to five candidate threads, and three of the five candidate threads do not exist in the candidate thread list corresponding to the 2^{nd} frame. In this case, the three candidate threads are added to the candidate thread list corresponding to the 2^{nd} frame, to obtain an updated candidate thread list (that is, a candidate thread list corresponding to the 3^{rd} frame). The updated candidate thread list includes 13 candidate threads. A process of determining a weight value of a thread in the updated candidate thread list is: adding a to each of weight values of the five candidate threads that are in the updated candidate thread list and that correspond to the 3^{rd} frame, and subtracting b from each of weight values of all the 13 candidate threads in the updated candidate thread list.

It should be noted that after a thread A in the candidate thread list is added to the key thread list, the thread A still exists in the candidate thread list, and participates in a weight value change process together with another candidate thread in the candidate thread list. When a weight value of the thread A in the candidate thread list changes, a weight value of the thread A in the key thread list synchronously changes.

By analogy, when the frame drawing thread draws each frame, the weight value of the candidate thread in the candidate thread list may change. In this way, a weight value of a thread with a high occurrence frequency in a plurality of frames may gradually increase, to accurately identify a key thread.

The key thread obtaining module 1350 is further configured to: add, to the key thread list, a thread whose weight value is greater than c in the updated candidate thread list, and remove, from the key thread list, a thread whose weight value is less than d in the key thread list.

In an example, the current frame (the i^{th} frame) is a 3^{rd} frame, a candidate thread list corresponding to a 2^{nd} frame includes 10 candidate threads, the 3^{rd} frame corresponds to five candidate threads, and three of the five candidate threads do not exist in the candidate thread list corresponding to the 2^{nd} frame. In this case, the three candidate threads are added to the candidate thread list corresponding to the 2^{nd} frame, to obtain an updated candidate thread list (that is, a candidate thread list corresponding to the 3^{rd} frame). The updated candidate thread list includes 13 candidate threads. A process of determining a weight value of a thread in the updated candidate thread list is: adding a to each of weight values of the five candidate threads that are in the updated candidate thread list and that correspond to the 3^{rd} frame, and subtracting b from each of weight values of all the candidate threads in the updated candidate thread list. Then, the key thread list is updated based on weight values of the 13 candidate threads in the updated candidate thread list. A specific update process is: adding, to the key thread list, the thread whose weight value is greater than c in the updated candidate thread list, and removing, from the key thread list, the thread whose weight value is less than d in the key thread list.

In some embodiments, a value of c may be 10.

A value of d is less than or equal to c. For example, the value of d may be 5.

It should be understood that the "frame" described in this embodiment of this application is a minimum unit of a single image picture in an image animation, and is equivalent to each shot on a filmstrip. One frame is one static picture. Consecutive frames form an animation, such as television pictures.

In an example, an application is located on a first chat interface. After the application receives a first message, the interface changes to a second chat interface. The first chat interface and the second chat interface may be considered as two frames of the application.

It should be further understood that in this embodiment of this application, the frame drawing scenario of the application is used as an example for description, but this constitutes no limitation on a use scenario of the apparatus of this application. The apparatus of this application may be further used in a running process of another thread.

The key thread management module 1360 is configured to provide targeted resource supply for each thread in the key thread list.

The key thread management module 1360 is further configured to provide resource supply for each thread in the key thread list based on a weight value interval corresponding to a weight value of the thread.

In some embodiments, resource supply for a thread in the key thread list is increased, and resource supply for a non-key thread is reduced.

In this embodiment of this application, in the system, a key thread related to a running task is determined from threads related to the running task by using an identification algorithm (a weight value algorithm). A process of identifying the key thread does not depend on subjective determining of an application developer, and the key thread related to the running task can be accurately identified, so that resource supply can be preferentially ensured for the determined key thread, to achieve better resource scheduling. In addition, the key thread is identified in each frame of the running task, and the key thread is determined based on occurrence probability and impact of the threads related to the running task in a plurality of frames, to improve stability of identifying the key thread and update the key thread in time. Further, a weight value is assigned to a thread, the weight value of the thread is adaptively adjusted in each frame, and a key thread list is dynamically updated based on a change of the weight value of the thread, so that an identification result of the key thread adapts to a change of a running status of the first thread, thereby further improving accuracy of identifying the key thread.

One or more of the modules or units described in this specification may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores used to execute software instructions to perform operations or processing. The processor may be built in a SoC (system on chip) or an application-specific integrated circuit (application-specific integrated circuit, ASIC), or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to execute the foregoing method procedure.

When the modules or units described in this specification are implemented by using software, all or a part of the modules or units may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that the units and method steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource scheduling method, wherein the method comprises:
when a first thread of an application is detected, obtaining, in an i^{th} periodicity of the first thread based on a thread wakeup relationship, a key thread list corresponding to the i^{th} periodicity, wherein the key thread list comprises one or more key threads related to the first thread, i is a natural number, and i=1, 2, 3, 4, ...; and
performing resource scheduling based on the key thread list corresponding to the i^{th} periodicity.

2. The method according to claim 1, wherein the method further comprises:
updating, in an (i+1)^{th} periodicity of the first thread, the key thread list corresponding to the i^{th} periodicity, to obtain a key thread list corresponding to the (i+1)^{th} periodicity; and
performing resource scheduling based on the key thread list corresponding to the (i+1)^{th} periodicity.

3. The method according to claim 2, wherein updating, in the (i+1)^{th} periodicity of the first thread, the key thread list corresponding to the i^{th} periodicity, to obtain the key thread list corresponding to the (i+1)^{th} periodicity comprises:
obtaining, in the (i+1)^{th} periodicity of the first thread based on a thread wakeup relationship, one or more second threads corresponding to the (i+1)^{th} periodicity; and
updating, based on the one or more second threads corresponding to the (i+1)^{th} periodicity, the key thread list corresponding to the i^{th} periodicity, to obtain the key thread list corresponding to the (i+1)^{th} periodicity.

4. The method according to any one of claims 1 to 3, wherein obtaining, in the i^{th} periodicity of the first thread based on the thread wakeup relationship, the key thread list corresponding to the i^{th} periodicity comprises:
determining, in the i^{th} periodicity of the first thread based on the thread wakeup relationship, one or more second threads corresponding to the i^{th} periodicity, wherein the second thread is a thread related to the first thread;
determining a weight of each of the one or more second threads corresponding to the i^{th} periodicity; and
determining, based on the weight of each of the one or more second threads corresponding to the i^{th} periodicity, the key thread list corresponding to the i^{th} periodicity from the one or more second threads corresponding to the i^{th} periodicity.

5. The method according to claim 4, wherein before determining the weight of each of the one or more second threads corresponding to the i^{th} periodicity, the method further comprises:
excluding a first-type thread in the one or more second threads corresponding to the i^{th} periodicity, wherein the first-type thread comprises a high-priority thread and/or a reusable thread.

6. The method according to claim 4 or 5, wherein determining the weight of each of the one or more second threads corresponding to the i^{th} periodicity comprises:
adding, to a candidate thread list, the one or more second threads corresponding to the i^{th} periodicity, to obtain a candidate thread list corresponding to the i^{th} periodicity;
adding a first weight to each weight of the one or more second threads corresponding to the i^{th} periodicity; and
subtracting a second weight from each of weights of all candidate threads in the candidate thread list corresponding to the i^{th} periodicity.

7. The method according to claim 6, wherein determining the key thread list corresponding to the i^{th} periodicity comprises:
adding, to a key thread list, a candidate thread whose weight is greater than a first weight threshold in the candidate thread list corresponding to the i^{th} periodicity, to determine the key thread list corresponding to the i^{th} periodicity.

8. The method according to claim 3, wherein updating, based on the one or more second threads corresponding to the (i+1)^{th} periodicity, the key thread list corresponding to the i^{th} periodicity, to obtain the key thread list corresponding to the (i+1)^{th} periodicity comprises:
updating, based on the one or more second threads corresponding to the (i+1)^{th} periodicity, a candidate thread list corresponding to the i^{th} periodicity, to obtain a candidate thread list corresponding to the (i+1)^{th} periodicity, wherein the candidate thread list corresponding to the (i+1)^{th} periodicity comprises the one or more second threads corresponding to the (i+1)^{th} periodicity;
adding a first weight to each weight of the one or more second threads corresponding to the (i+1)^{th} periodicity;
subtracting a second weight from each of weights of all candidate threads in the candidate thread list corresponding to the (i+1)^{th} periodicity; and
updating, based on the weight of each candidate thread in the candidate thread list corresponding to the (i+1)^{th} periodicity, the key thread list corresponding to the i^{th} periodicity, to obtain the key thread list corresponding to the (i+1)^{th} periodicity.

9. The method according to claim 8, wherein before updating, based on the one or more second threads corresponding to the (i+1)^{th} periodicity, the candidate thread list corresponding to the i^{th} periodicity, the method further comprises:
excluding a first-type thread in the one or more second threads corresponding to the (i+1)^{th} periodicity, wherein the first-type thread comprises a high-priority thread and/or a reusable thread.

10. The method according to claim 8 or 9, wherein updating, based on the weight of each candidate thread in the candidate thread list corresponding to the (i+1)^{th} periodicity, the key thread list corresponding to the i^{th} periodicity comprises:
adding, to the key thread list corresponding to the i^{th} periodicity, a thread whose weight is greater than a first weight threshold in the candidate thread list corresponding to the (i+1)^{th} periodicity; and
removing, from the key thread list corresponding to the i^{th} periodicity, a thread whose weight is less than a second weight threshold in the candidate thread list corresponding to the (i+1)^{th} periodicity, wherein the first weight threshold is greater than or equal to the second weight threshold.

11. The method according to any one of claims 1 to 10, wherein performing resource scheduling based on the key thread list corresponding to the i^{th} periodicity comprises:
increasing resource supply for a thread in the key thread list corresponding to the i^{th} periodicity, and reducing resource supply for a thread outside the key thread list corresponding to the i^{th} periodicity; or
performing resource scheduling based on the key thread list corresponding to the (i+1)^{th} periodicity comprises:
increasing resource supply for a thread in the key thread list corresponding to the (i+1)^{th} periodicity, and reducing resource supply for a thread outside the key thread list corresponding to the (i+1)^{th} periodicity.

12. The method according to claim 11, wherein the method further comprises:
providing resource supply for a thread in the key thread list at levels.

13. The method according to any one of claims 6 to 10, wherein the first weight is equal to a₁ when i is less than or equal to a first periodicity threshold, and the first weight is equal to a₂ when i is greater than the first periodicity threshold, wherein a₁>a₂>0.

14. The method according to any one of claims 1 to 13, wherein the first thread is a frame drawing thread.

15. A resource scheduling apparatus, wherein the apparatus comprises:
an obtaining module, configured to: when a first thread of an application is detected, obtain, in an i^{th} periodicity of the first thread based on a thread wakeup relationship, a key thread list corresponding to the i^{th} periodicity, wherein the key thread list comprises one or more key threads related to the first thread, i is a natural number, and i=1, 2, 3, 4, ...; and
a resource scheduling module, configured to perform resource scheduling based on the key thread list corresponding to the i^{th} periodicity.

16. The apparatus according to claim 15, wherein the apparatus further comprises:
an update module, configured to update, in an (i+1)^{th} periodicity of the first thread, the key thread list corresponding to the i^{th} periodicity, to obtain a key thread list corresponding to the (i+1)^{th} periodicity; and
the resource scheduling module is further configured to:
perform resource scheduling based on the key thread list corresponding to the (i+1)^{th} periodicity.

17. The apparatus according to claim 16, wherein the update module is specifically configured to:
obtain, in the (i+1)^{th} periodicity of the first thread based on a thread wakeup relationship, one or more second threads corresponding to the (i+1)^{th} periodicity; and
update, based on the one or more second threads corresponding to the (i+1)^{th} periodicity, the key thread list corresponding to the i^{th} periodicity, to obtain the key thread list corresponding to the (i+1)^{th} periodicity.

18. The apparatus according to any one of claims 15 to 17, wherein the obtaining module is specifically configured to:
determine, in the i^{th} periodicity of the first thread based on the thread wakeup relationship, one or more second threads corresponding to the i^{th} periodicity, wherein the second thread is a thread related to the first thread;
determine a weight of each of the one or more second threads corresponding to the i^{th} periodicity; and
determine, based on the weight of each of the one or more second threads corresponding to the i^{th} periodicity, the key thread list corresponding to the i^{th} periodicity from the one or more second threads corresponding to the i^{th} periodicity.

19. The apparatus according to claim 18, wherein the apparatus further comprises:
a preprocessing module, configured to exclude a first-type thread in the one or more second threads corresponding to the i^{th} periodicity, wherein the first-type thread comprises a high-priority thread and/or a reusable thread.

20. The apparatus according to claim 18 or 19, wherein the obtaining module is further specifically configured to:
add, to a candidate thread list, the one or more second threads corresponding to the i^{th} periodicity, to obtain a candidate thread list corresponding to the i^{th} periodicity;
add a first weight to each weight of the one or more second threads corresponding to the i^{th} periodicity; and
subtract a second weight from each of weight values of all candidate threads in the candidate thread list corresponding to the i^{th} periodicity.

21. The apparatus according to claim 20, wherein the obtaining module is further specifically configured to:
add, to a key thread list, a candidate thread whose weight is greater than a first weight threshold in the candidate thread list corresponding to the i^{th} periodicity, to determine the key thread list corresponding to the i^{th} periodicity.

22. The apparatus according to claim 17, wherein the update module is further specifically configured to:
update, based on the one or more second threads corresponding to the (i+1)^{th} periodicity, a candidate thread list corresponding to the i^{th} periodicity, to obtain a candidate thread list corresponding to the (i+1)^{th} periodicity, wherein the candidate thread list corresponding to the (i+1)^{th} periodicity comprises the one or more second threads corresponding to the (i+1)^{th} periodicity;
add a first weight to each weight of the one or more second threads corresponding to the (i+1)^{th} periodicity;
subtract a second weight from each of weights of all candidate threads in the candidate thread list corresponding to the (i+1)^{th} periodicity; and
update, based on the weight of each candidate thread in the candidate thread list corresponding to the (i+1)^{th} periodicity, the key thread list corresponding to the i^{th} periodicity, to obtain the key thread list corresponding to the (i+1)^{th} periodicity.

23. The apparatus according to claim 22, wherein the preprocessing module is further configured to:
exclude a first-type thread in the one or more second threads corresponding to the (i+1)^{th} periodicity, wherein the first-type thread comprises a high-priority thread and/or a reusable thread.

24. The apparatus according to claim 22 or 23, wherein the update module is further specifically configured to:
add, to the key thread list corresponding to the i^{th} periodicity, a thread whose weight is greater than a first weight threshold in the candidate thread list corresponding to the (i+1)^{th} periodicity; and
remove, from the key thread list corresponding to the i^{th} periodicity, a thread whose weight is less than a second weight threshold in the candidate thread list corresponding to the (i+1)^{th} periodicity, wherein the first weight threshold is greater than or equal to the second weight threshold.

25. The apparatus according to any one of claims 15 to 24, wherein the resource scheduling module is specifically configured to:
increase resource supply for a thread in the key thread list corresponding to the i^{th} periodicity, and reduce resource supply for a thread outside the key thread list corresponding to the i^{th} periodicity; or
performing resource scheduling based on the key thread list corresponding to the (i+1)^{th} periodicity comprises:
increasing resource supply for a thread in the key thread list corresponding to the (i+1)^{th} periodicity, and reducing resource supply for a thread outside the key thread list corresponding to the (i+1)^{th} periodicity.

26. The apparatus according to claim 25, wherein the resource scheduling module is further specifically configured to:
provide resource supply for a thread in the key thread list at levels.

27. The apparatus according to any one of claims 20 to 24, wherein the first weight is equal to a₁ when i is less than or equal to a first periodicity threshold, and the first weight is equal to a₂ when i is greater than the first periodicity threshold, wherein a₁>a₂>0.

28. The apparatus according to any one of claims 15 to 27, wherein the first thread is a frame drawing thread.

29. An electronic device, comprising:
one or more processors;
one or more memories; and
one or more computer programs, wherein the one or more computer programs are stored in the one or more memories; the one or more computer programs comprise instructions; and when the instructions are executed by the one or more processors, the electronic device is enabled to perform the method according to any one of claims 1 to 14.

30. A computer-readable storage medium, wherein the storage medium stores a program or instructions; and when the program runs or the instructions are run, the method according to any one of claims 1 to 14 is implemented.

31. A chip, comprising:
one or more processors; and
one or more memories, wherein the one or more processors are coupled to the one or more memories, and are configured to read and execute instructions in the one or more memories, to perform the method according to any one of claims 1 to 14.
